(19) Europäisches Patentamt / European Patent Office / Office européen des brevets

(11) **EP 4 697 086 A1**

(12) **EUROPEAN PATENT APPLICATION**
published in accordance with Art. 153(4) EPC

(43) Date of publication:
**18.02.2026 Bulletin 2026/08**

(21) Application number: **24788850.6**

(22) Date of filing: **12.04.2024**

(51) International Patent Classification (IPC):
**G02C 7/06** (2006.01)          **G02B 1/14** (2015.01)
**G02C 7/02** (2006.01)

(52) Cooperative Patent Classification (CPC):
**G02B 1/14; G02C 7/02; G02C 7/06**

(86) International application number:
**PCT/JP2024/014874**

(87) International publication number:
**WO 2024/214828 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.04.2023 JP 2023065383**

(71) Applicant: **Hoya Lens Thailand Ltd.
Pathumthani 12130 (TH)**

(72) Inventor: **KONO Shigetoshi
Tokyo 160-8347 (JP)**

(74) Representative: **Hoffmann Eitle
Patent- und Rechtsanwälte PartmbB
Arabellastraße 30
81925 München (DE)**

(54) **SPECTACLE LENS, SPECTACLES, SPECTACLE LENS MANUFACTURING METHOD, FILM THICKNESS CONTROL METHOD FOR HARD COAT FILM OF SPECTACLE LENS, FILM THICKNESS CONTROL SYSTEM FOR HARD COAT FILM OF SPECTACLE LENS, AND PROGRAM FOR CONTROL SYSTEM**

(57) Provided are a spectacle lens and related technology thereof. The spectacle lens includes a functional region having a base region and a defocus region and achieves a myopia progression suppressing effect. The spectacle lens includes a lens substrate and a hard coat film. From a lens center toward an outer edge on at least one straight line passing through the lens center of the spectacle lens when the spectacle lens is viewed in plan facing the defocus region, a degree to which the hard coat film fills the lens substrate tends to increase and irregularities between convex regions and the base region tend to become smoother, or the degree to which the hard coat film fills the lens substrate tends to decrease and the irregularities between the convex regions and the base region tend to become steeper.

[Fig. 5]

**Description**

[Technical Field]

The present invention relates to a spectacle lens, spectacles, a method for producing a spectacle lens, a method for controlling the film thickness of a hard coat film on a spectacle lens, a control system for the film thickness of a hard coat film on a spectacle lens, and a program for the control system.

[Background Art]

PTL 1 describes a spectacle lens that suppresses the progression of anomalies of refraction such as myopia. Specifically, for example, spherical minute convex portions (substrate protrusions in this specification) each having a diameter of approximately 1 mm are formed on the convex surface, which corresponds to the object-side surface of the spectacle lens. In a spectacle lens, a light flux incident from the object-side surface is usually emitted from the eye-side surface and focused on the retina of the wearer. On the other hand, a light flux that has passed through the minute convex portions described above is focused at a position closer to the object side (front side) than the retina of the wearer. As a result, the progression of myopia is suppressed. In this specification, a spectacle lens of this type is also referred to as a "myopia progression suppressing lens."

PTL 2 describes a spectacle lens that is capable of suppressing the progression of myopia, which is produced using a dip method in which the lowermost end of the lens substrate is immersed first in a film coating liquid, and the uppermost end thereof is immersed last, so that the entire lens substrate is immersed in the liquid. During lifting, the lens substrate is lifted upward in the vertical direction in the reverse order ([0050] in PTL 2).

[Citation List]

[Patent Literature]

[PTL 1] U.S. Patent Application Publication No. 2017/0131567
[PTL 2] WO 2021/131825

[Summary of Invention]

[Technical Problem]

In a myopia progression suppressing lens of the type described in PTL 1, a multiplicity of convex regions are provided on the surface of the spectacle lens. Therefore, as a specific producing method, it is reasonable in terms of production efficiency to obtain a lens substrate having a multiplicity of protrusions by injection molding, form a hard coat film or the like on the protrusions, and form convex regions on the surface of the spectacle lens in conformity with the shapes of the protrusions. In this specification, the term convex region is used for a spectacle lens after a hard coat film or the like has been formed, while the term protrusion is used for the lens substrate.

The lower side of a spectacle lens when worn is often used for near vision such as reading, while the upper side of the spectacle lens is often used for distance vision such as viewing a landscape.

As described above, injection molding requires a die.

On the other hand, some wearers request, during frontal vision (for example, distance vision), a view similar to that provided by ordinary spectacle lenses (Case 1). In order to realize this request by injection molding, it is necessary to make the shape of each protrusion (lens substrate) at the position for distance vision different from those of other protrusions in the die. Such a change in die design requires significant cost and time.

Another request is as follows.

When a parallel light flux is incident on the pupil from a sufficiently far distance, the convex regions of the spectacle lens exert refractive power according to their shapes. On the other hand, when divergent light is incident on the pupil from a position near the wearer of the spectacle lens, the convex regions of the spectacle lens exert only low refractive power.

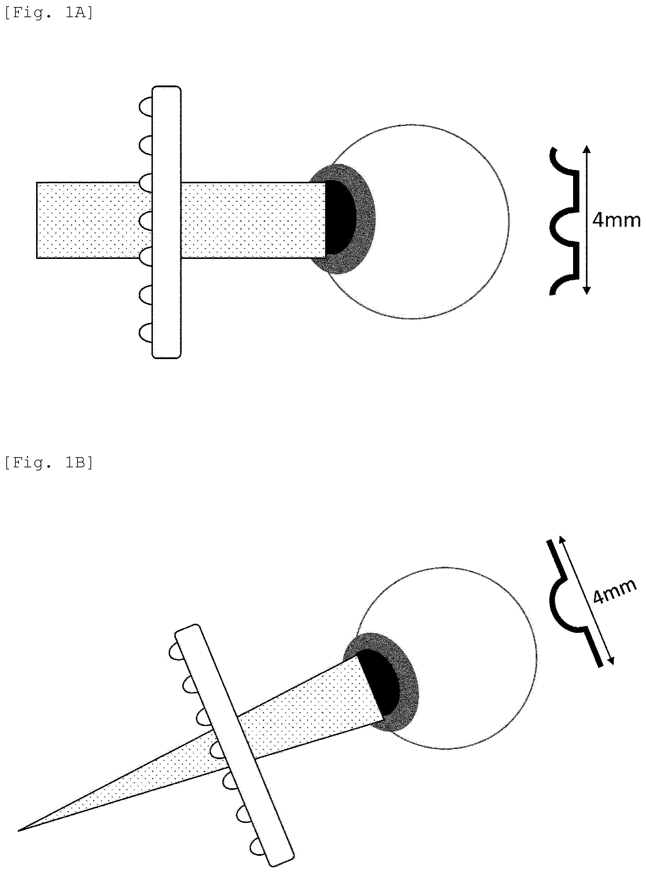

Fig. 1A is an explanatory view showing the state of a spherical wave ($\varphi$ 4, i.e., within a pupil diameter of 4.0 mm, located behind the eye) when a parallel light flux from a sufficiently far distance passes through a myopia progression suppressing lens and is incident on the pupil.

Fig. 1B is an explanatory view showing the state of a spherical wave ($\varphi$ 4, i.e., within a pupil diameter of 4.0 mm, located behind the eye) when divergent light from a position near the wearer of a myopia progression suppressing lens passes through the myopia progression suppressing lens and is incident on the pupil.

In Fig. 1A, a spherical wave is generated corresponding to each minute convex portion (convex region in the present application). On the other hand, in Fig. 1B, divergent light that has passed through each convex region is incident on the pupil from the oblique lower side to the oblique upper side. As a result, compared to each spherical wave in Fig. 1A, one spherical wave appears extended in the vertical direction of the figure. This extended ratio becomes approximately (1 + L/T), where the corneal vertex distance is represented by L [mm] and the distance from the lens to the object during near vision is represented by T [mm]. Naturally, the retina receives the spherical wave corresponding to each convex region. However, during near vision using the myopia progression suppressing lens, this reception does not occur, resulting in only low refractive power. Specifically, the apparent power decreases in reverse proportion to the square of the extended ratio, that is, the apparent power becomes $1/(1 + L/S)^2$ of the original apparent power. For example, when L = 12 mm and T = 300 mm, the extended ratio becomes 1.04 and the apparent power becomes 1/1.08 of the original power. This phenomenon may be referred to as "a decrease in apparent power." Furthermore, this phenomenon occurs because the refractive effect is determined by (the incident height on the lens × the refractive power), and in the case of incident divergent light, the height of incidence on the spectacles at a position in front of the pupil becomes relatively lower.

In view of this, it is considered as one approach to increase in advance the defocus power of each convex region located at the position through which the line of sight passes when the myopia progression suppressing lens is viewed for near vision. In the foregoing case, if the defocus power is increased by a factor of $(1 + L/S)^2$, the apparent power during near vision becomes approximately equal to the original power. However, considering that the lower portion of the lens is not always used for near vision and is used for distance vision during walking or the like, it is more balanced for both cases to increase the defocus power by a factor of (1 + L/S), which represents an intermediate value between 1 time and a factor of $(1 + L/S)^2$. In the foregoing case, it is preferable to increase the defocus power by a factor of 1.04.

Injection molding requires a die. Further, in response to a decrease in apparent power during near vision, it is necessary to make the shape of each protrusion (lens substrate) at the position for near vision different from the shapes of other protrusions in the die in order to increase in advance the defocus power of each convex region located at the position through which the line of sight passes when the myopia progression suppressing lens is viewed for near vision. Such a change in die design requires significant cost and time (Case 2).

Furthermore, a paper reports that children who showed a significant myopia suppressing effect from orthokeratology therapy had a large difference in power between the upper and lower portions of the eye. The paper was published in Translational Vision Science & Technology 2018 Nov; 7(6): 17. Published online 2018 Nov 30. doi: 10.1167/tvst.7.6.17 and is available at the following site (https://www.ncbi.nlm.nih.gov/pmc/articles/PMC6269134/). According to the content of this paper, it is necessary to set the shape of each protrusion (lens substrate) in an injection molding die in consideration of the difference in power between the upper and lower portions of the wearer's eye. Such a change in mode design also requires significant cost and time (Case 3).

As described above, the conditions required by each wearer for the myopia progression suppressing lens vary widely. In addition, the primary wearers of the myopia progression suppressing lenses are children. Children exhibit greater variability in distance (near distance) in near vision than adults, even during the same activity such as reading, due to differences in age and/or physique. In other words, a change in die design in accordance with each child requires more significant cost and time.

One embodiment according to a spectacle lens or spectacles of the present invention aims to provide a myopia progression suppressing lens that is capable of meeting the conditions required by each wearer through a hard coat film.

One embodiment according to aspects other than the spectacle lens and spectacles of the present invention aims to provide a myopia progression suppressing lens that is capable of meeting the conditions required by each wearer through a hard coat film, while reducing the consumption of cost and time.

[Solution to Problem]

In order to solve the above problems, the present inventor has conducted extensive studies. As a result, it has been found that the conditions required by each wearer are met not through a die, but through factors applied after the production of a lens substrate, specifically, through a hard coat film. More specifically, it has been found that the conditions required by each wearer are met by increasing or decreasing (continuously or discontinuously) the degree of irregularities between the convex regions and the base region from the lens center toward the outer edge, when the spectacle lens is viewed in plan facing the non-convergent region on the retina. On the basis of the above findings, the following aspects have been developed.

A first aspect of the present invention provides a spectacle lens that achieves a myopia progression suppressing effect and includes a functional region having a base region that causes a light flux incident from an object-side surface to be emitted from an eye-side surface, enter a wearer's pupil, and be focused on a retina to achieve wearer's prescription power, and a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region, the spectacle lens including:

a lens substrate having a substrate base portion and a plurality of substrate protrusions protruding from the substrate base portion on a surface thereof; and
a hard coat film that forms the base region so as to cover the substrate base portion and forms the defocus region so as to cover the plurality of substrate protrusions by covering the lens substrate including the plurality of substrate protrusions,
wherein,
from a lens center toward an outer edge on at least one straight line passing through the lens center of the spectacle lens when the spectacle lens is viewed in plan facing the defocus region,
a degree to which the hard coat film fills the lens substrate tends to increase and irregularities between the convex regions and the base region tend to become smoother, or
the degree to which the hard coat film fills the lens substrate tends to decrease and the irregularities between the convex regions and the base region tend to become steeper.

A second aspect of the present invention provides the spectacle lens according to the first aspect, wherein,

on the one straight line,
the degree to which the hard coat film fills the lens substrate tends to increase and the irregularities between the convex regions and the base region tend to become smoother from the lens center toward one outer edge, and
the degree to which the hard coat film fills the lens substrate tends to decrease and the irregularities between the convex regions and the base region tend to become steeper from the lens center toward another outer edge.

A third aspect of the present invention provides the spectacle lens according to any one of the first and second aspects, including:

a direction indicating portion that indicates a direction of the spectacle lens when worn, wherein
the degree to which the hard coat film fills the lens substrate tends to increase and the irregularities between the convex regions and the base region tend to become smoother from the lens center toward an upper outer edge, and
the degree to which the hard coat film fills the lens substrate tends to decrease and the irregularities between the convex regions and the base region tend to become steeper from the lens center toward a lower outer edge.

A fourth aspect of the present invention provides the spectacle lens according to any one of the first to third aspects, wherein
a value of defocus power [unit: D] of 80% or more of the convex regions in the spectacle lens is 0.102 $\mu$m $\times$ 8/(a diameter of the convex regions [unit: mm])^2 or more.

A fifth aspect of the present invention provides the spectacle lens according to any one of the first to fourth aspects, wherein
the spectacle lens is an uncut lens before lens shaping.

A sixth aspect of the present invention provides the spectacle lens according to any one of the first to fifth aspects, wherein
defocus power of 80% or more of the convex regions in the spectacle lens is in a range of 3.0 to 5.0 D.

A seventh aspect of the present invention provides the spectacle lens according to any one of the first to sixth aspects, wherein
defocus power of 80% or more of the substrate protrusions in the lens substrate falls within a range of $\pm$ 0.12 D.

An eighth aspect of the present invention provides the spectacle lens according to the seventh aspect, wherein
defocus power of the convex regions approaches the defocus power of the substrate protrusions underlying the convex regions from an upper side to a lower side of the spectacle lens when worn.

A ninth aspect of the present invention provides the spectacle lens according to any one of the first to eighth aspects, further including:

a central clear region that is surrounded by the functional region and includes an eye point, wherein
the central clear region causes a light flux incident from the object-side surface to be emitted from the eye-side surface, enter the wearer's pupil, and be focused on the retina to achieve the wearer's prescription power.

A tenth aspect of the present invention provides the spectacle lens according to any one of the first to ninth aspects, further including:

an outer clear region that serves as an annular region surrounding the functional region on an outer edge side of the spectacle lens, wherein
the outer clear region causes a light flux incident from the object-side surface to be emitted from the eye-side surface, enter the wearer's pupil, and be focused on the retina to achieve the wearer's prescription power.

An eleventh aspect of the present invention provides
spectacles in which the spectacle lens according to any one of the first to tenths aspects is mounted in a frame.
A twelfth aspect of the present invention provides the spectacles according to the eleventh aspect, wherein, when the spectacle lens is viewed in plan facing the defocus region, the degree to which the hard coat film fills the lens substrate tends to increase and the irregularities between the convex regions and the base region tend to become smoother toward the upper side.
A thirteenth aspect of the present invention provides a method for producing a spectacle lens that achieves a myopia progression suppressing effect and includes a functional region having

a base region that causes a light flux incident from an object-side surface to be emitted from an eye-side surface, enter a wearer's pupil, and be focused on a retina to achieve wearer's prescription power, and
a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region,
the method including:

an immersion step of immersing a lens substrate in a hard coat liquid, the lens substrate having a substrate base portion and a plurality of substrate protrusions protruding from the substrate base portion on a surface thereof;
a lifting step of lifting the lens substrate from the hard coat liquid; and
a drying step of obtaining a hard coat film that forms the base region so as to cover the substrate base portion and forms the defocus region so as to cover the plurality of substrate protrusions by covering the lens substrate including the plurality of substrate protrusions,
wherein

(1) an immersion direction determining step is performed prior to the immersion step to determine a direction in which the lens substrate of the spectacle lens when worn is immersed in the hard coat liquid in accordance with a direction indicated by a direction indicating portion, corresponding to a change in defocus power between the convex regions in a case in which the lens substrate includes the direction indicating portion that indicates the direction of the spectacle lens when worn, or
(2) a defocus power change direction determining step is performed prior to the immersion step to determine a direction from the lens center of the lens substrate toward a portion at which the lens substrate first comes into contact with the hard coat liquid as a direction in which defocus power is changed between the convex regions in a case in which the lens substrate does not include a direction indicating portion that indicates the direction of the spectacle lens when worn,

a lifting speed setting step is performed prior to the lifting step to set a lifting speed of the lens substrate in the lifting step, corresponding to the defocus power set in each of the convex regions, and
a lifting speed control step is performed, in accordance with a content set in the lifting speed setting step, to increase the lifting speed of the lens substrate from a start to an end of lifting during the lifting step, and wherein, from the lens center toward an outer edge on at least one straight line passing through the lens center of the spectacle lens when the spectacle lens is viewed in plan facing the defocus region,
a degree to which the hard coat film fills the lens substrate tends to increase and irregularities between the convex regions and the base region tend to become smoother, or
the degree to which the hard coat film fills the lens substrate tends to decrease and the irregularities between the convex regions and the base region tend to become steeper.

A fourteenth aspect of the present invention provides the method for producing the spectacle lens according to the thirteenth aspect, wherein,
during the immersion step, the lens substrate is immersed in the hard coat liquid from a tip end side thereof in one direction where the defocus power of each of the convex regions tends to decrease toward the one direction when the spectacle lens is viewed in plan facing the defocus region.

A fifteenth aspect of the present invention provides a method for controlling a film thickness of a hard coat film on a spectacle lens that achieves a myopia progression suppressing effect and includes a functional region having

a base region that causes a light flux incident from an object-side surface to be emitted from an eye-side surface, enter a wearer's pupil, and be focused on a retina to achieve wearer's prescription power, and

a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region, the method including:

an immersion step of immersing a lens substrate in a hard coat liquid, the lens substrate having a substrate base portion and a plurality of substrate protrusions protruding from the substrate base portion on a surface thereof;

a lifting step of lifting the lens substrate from the hard coat liquid; and

a drying step of obtaining a hard coat film that forms the base region so as to cover the substrate base portion and forms the defocus region so as to cover the plurality of substrate protrusions by covering the lens substrate including the plurality of substrate protrusions,

wherein

(1) an immersion direction determining step is performed prior to the immersion step to determine a direction in which the lens substrate of the spectacle lens when worn is immersed in the hard coat liquid in accordance with a direction indicated by a direction indicating portion, corresponding to a change in defocus power between the convex regions in a case in which the lens substrate includes the direction indicating portion that indicates the direction of the spectacle lens when worn, or

(2) a defocus power change direction determining step is performed prior to the immersion step to determine a direction from the lens center of the lens substrate toward a portion at which the lens substrate first comes into contact with the hard coat liquid as a direction in which defocus power is changed between the convex regions in a case in which the lens substrate does not include a direction indicating portion that indicates the direction of the spectacle lens when worn,

a lifting speed setting step is performed prior to the lifting step to set a lifting speed of the lens substrate in the lifting step, corresponding to the defocus power set in each of the convex regions, and

a lifting speed control step is performed, in accordance with a content set in the lifting speed setting step, to increase the lifting speed of the lens substrate from a start to an end of lifting during the lifting step, and wherein, from the lens center toward an outer edge on at least one straight line passing through the lens center of the spectacle lens when the spectacle lens is viewed in plan facing the defocus region,

a degree to which the hard coat film fills the lens substrate tends to increase and irregularities between the convex regions and the base region tend to become smoother, or

the degree to which the hard coat film fills the lens substrate tends to decrease and the irregularities between the convex regions and the base region tend to become steeper.

A sixteenth aspect of the present invention provides a control system for a film thickness of a hard coat film on a spectacle lens that achieves a myopia progression suppressing effect,

the spectacle lens including

a functional region having

a base region that causes a light flux incident from an object-side surface to be emitted from an eye-side surface, enter a wearer's pupil, and be focused on a retina to achieve wearer's prescription power, and

a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region,

the spectacle lens being obtained through

an immersion step of immersing a lens substrate in a hard coat liquid, the lens substrate having a substrate base portion and a plurality of substrate protrusions protruding from the substrate base portion on a surface thereof,

a lifting step of lifting the lens substrate from the hard coat liquid, and

a drying step of obtaining a hard coat film that forms the base region so as to cover the substrate base portion and forms the defocus region so as to cover the plurality of substrate protrusions by covering the lens substrate including the plurality of substrate protrusions,

the control system including:

(1) an immersion direction determining portion that, prior to the immersion step, determines a direction in which the lens substrate of the spectacle lens when worn is immersed in the hard coat liquid in accordance with a direction indicated by a direction indicating portion, corresponding to a change in defocus power between the convex regions, in a case in which the lens substrate includes the direction indicating portion that indicates the direction of the spectacle lens when worn, or

(2) a defocus power change direction determining portion that, prior to the immersion step, determines a direction from a lens center of the lens substrate toward a portion at which the lens substrate first comes into contact with the hard coat liquid as a direction in which defocus power is changed between the convex regions, in a case in which the lens substrate does not include a direction indicating portion that indicates a direction of the spectacle lens when worn;

a lifting speed setting portion that, prior to the lifting step, sets a lifting speed of the lens substrate in the lifting step, corresponding to the defocus power set in each of the convex regions; and

a lifting speed control portion that, in accordance with a content set by the lifting speed setting portion, increases the lifting speed of the lens substrate from a start to an end of lifting during the lifting step,

wherein,

from the lens center toward an outer edge on at least one straight line passing through the lens center of the spectacle lens when the spectacle lens is viewed in plan facing the defocus region,

a degree to which the hard coat film fills the lens substrate tends to increase and irregularities between the convex regions and the base region tend to become smoother, or

the degree to which the hard coat film fills the lens substrate tends to decrease and the irregularities between the convex regions and the base region tend to become steeper.

A seventeenth aspect of the present invention provides a program for a control system for a film thickness of a hard coat film on a spectacle lens that achieves a myopia progression suppressing effect,

the spectacle lens including

a functional region having

a base region that causes a light flux incident from an object-side surface to be emitted from an eye-side surface, enter a wearer's pupil, and be focused on a retina to achieve wearer's prescription power, and

a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region,

the spectacle lens being obtained through

an immersion step of immersing a lens substrate in a hard coat liquid, the lens substrate having a substrate base portion and a plurality of substrate protrusions protruding from the substrate base portion on a surface thereof,

a lifting step of lifting the lens substrate from the hard coat liquid, and

a drying step of obtaining a hard coat film that forms the base region so as to cover the substrate base portion and forms the defocus region so as to cover the plurality of substrate protrusions by covering the lens substrate including the plurality of substrate protrusions,

the program causing a computer to function as:

(1) an immersion direction determining portion that, prior to the immersion step, determines a direction in which the lens substrate of the spectacle lens when worn is immersed in the hard coat liquid in accordance with a direction indicated by a direction indicating portion, corresponding to a change in defocus power between the convex regions, in a case in which the lens substrate includes the direction indicating portion that indicates the direction of the spectacle lens when worn; or

(2) a defocus power change direction determining portion that, prior to the immersion step, determines a direction from a lens center of the lens substrate toward a portion at which the lens substrate first comes into contact with the hard coat liquid as a direction in which defocus power is changed between the convex regions, in a case in which the lens substrate does not include a direction indicating portion that indicates a direction of the spectacle lens when worn;

a lifting speed setting portion that, prior to the lifting step, sets a lifting speed of the lens substrate in the lifting step, corresponding to the defocus power set in each of the convex regions; and

a lifting speed control portion that, in accordance with a content set by the lifting speed setting portion, increases the lifting speed of the lens substrate from a start to an end of lifting during the lifting step,

wherein,

from the lens center toward an outer edge on at least one straight line passing through the lens center of the spectacle lens when the spectacle lens is viewed in plan facing the defocus region,

a degree to which the hard coat film fills the lens substrate tends to increase and irregularities between the convex regions and the base region tend to become smoother, or

the degree to which the hard coat film fills the lens substrate tends to decrease and the irregularities between the convex regions and the base region tend to become steeper.

[Advantageous Effects of Invention]

One embodiment according to a spectacle lens or spectacles of the present invention can provide a myopia progression suppressing lens that is capable of meeting the conditions required by each wearer through a hard coat film.

One embodiment according to aspects other than the spectacle lens and spectacles of the present invention can provide a myopia progression suppressing lens that is capable of meeting the conditions required by each wearer through a hard coat film, while reducing the consumption of cost and time.

[Brief Description of Drawings]

[Fig. 1A]
Fig. 1A is an explanatory view showing the state of a spherical wave when a parallel light flux from a sufficiently far distance passes through a myopia progression suppressing lens and is incident on the pupil.
[Fig. 1B]
Fig. 1B is an explanatory view showing the state of a spherical wave when divergent light from a position near the wearer of a myopia progression suppressing lens passes through the myopia progression suppressing lens and is incident on the pupil.
[Fig. 2]

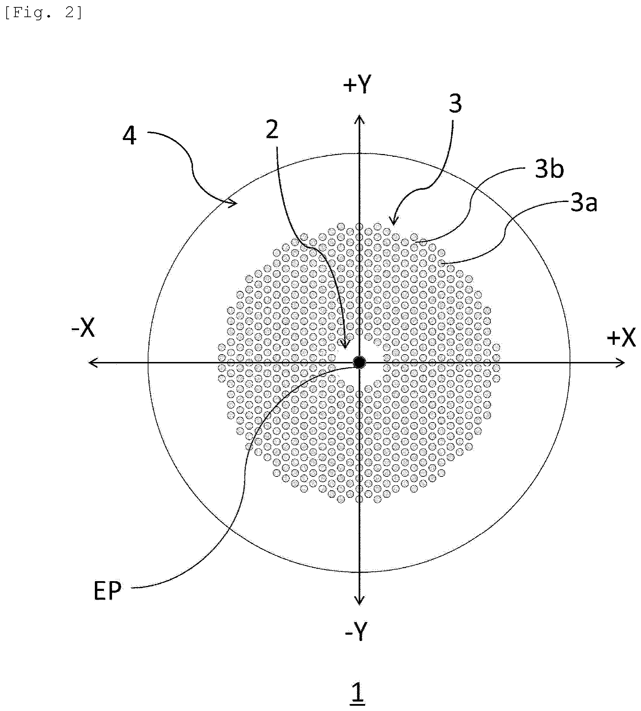

Fig. 2 is a schematic plan view of a spectacle lens according to one aspect of the present invention.
[Fig. 3]

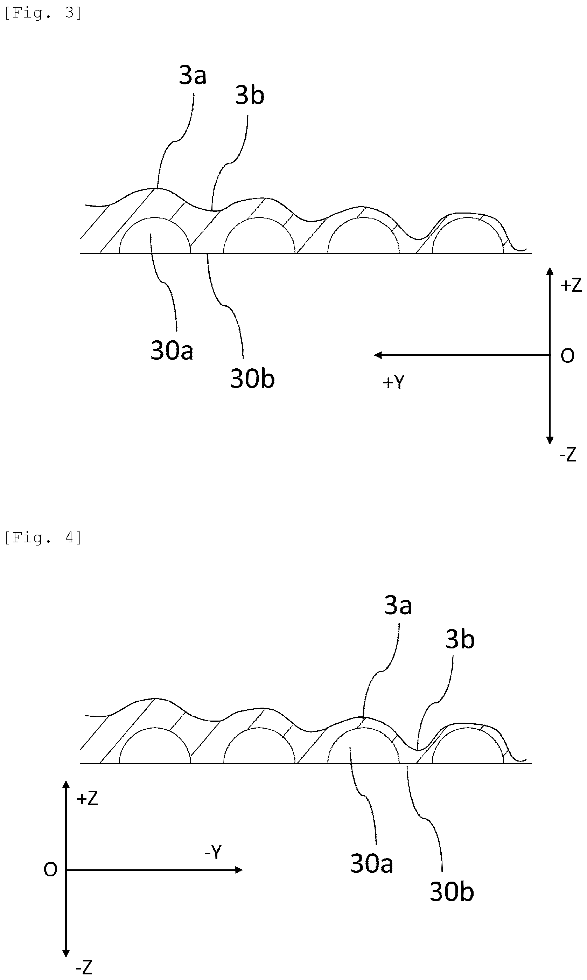

Fig. 3 is a schematic view of the upper side of the YZ cross-section of the spectacle lens according to one aspect of the present invention addressing Case 1.
[Fig. 4]
Fig. 4 is a schematic view of the lower side of the YZ cross-section of the spectacle lens according to one aspect of the present invention addressing Case 2.
[Fig. 5]

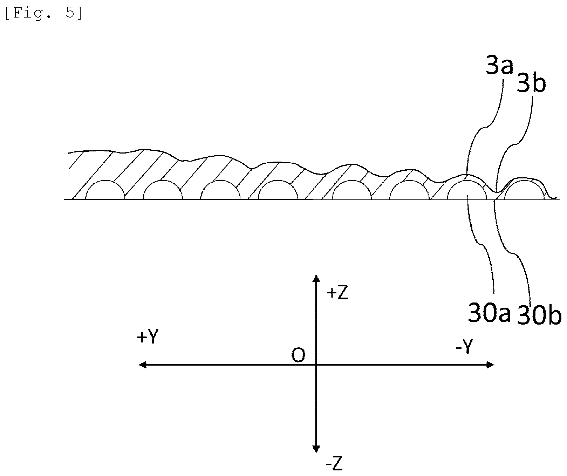

Fig. 5 is a schematic view of the YZ cross-section of the spectacle lens according to one aspect of the present invention addressing Cases 1 and 2.
[Fig. 6]

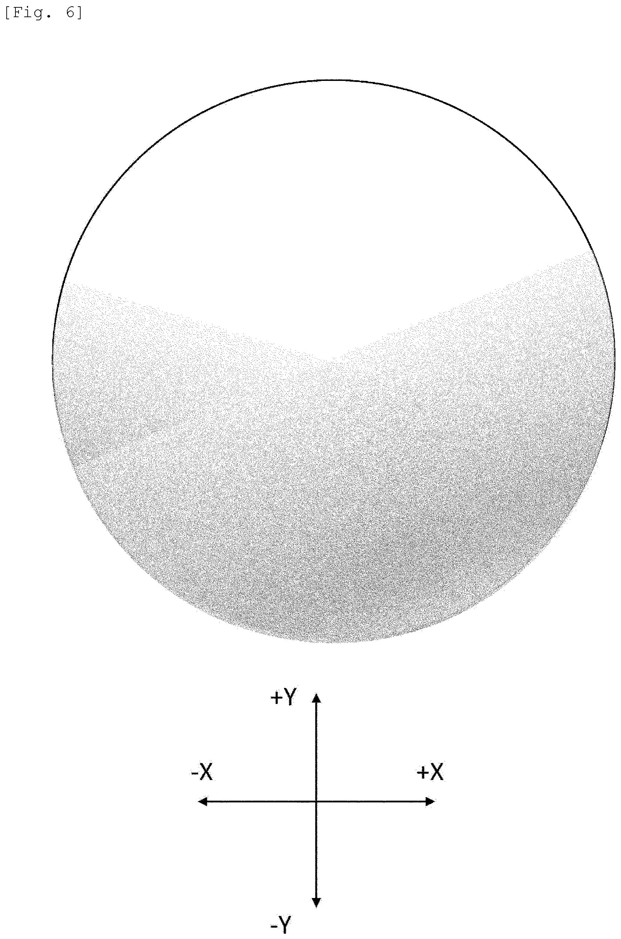

Fig. 6 is a plan distribution view of the defocus power to be set so as to cancel out a difference in power between the upper and lower portions of the wearer's eye in Case 3, showing that the defocus power becomes greater as the color becomes denser.
[Fig. 7]

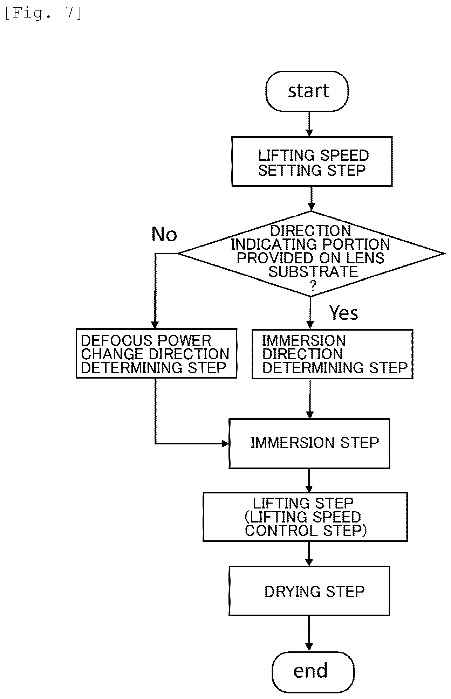

Fig. 7 is a schematic flow diagram of a method for producing the spectacle lens according to one aspect of the present invention.
[Fig. 8]

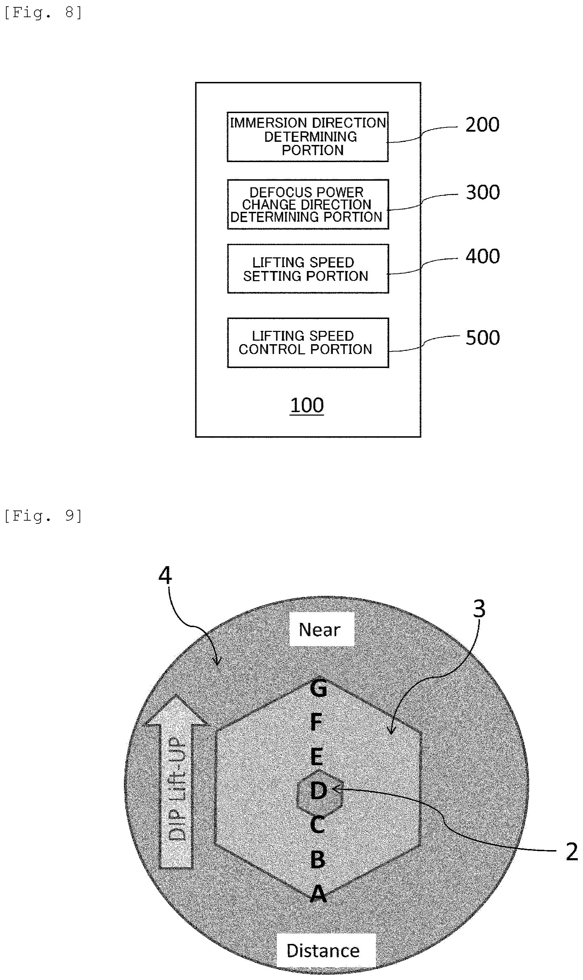

Fig. 8 is a schematic block diagram showing the configuration of a control system for the film thickness of the hard coat film on the spectacle lens according to one aspect of the present invention.
[Fig. 9]
Fig. 9 is a schematic plan view of a lens substrate in which the uppermost position of a functional region is defined as position A and the lowermost position thereof is defined as position G, the lens substrate being immersed in a hard coat liquid from position A.
[Fig. 10]

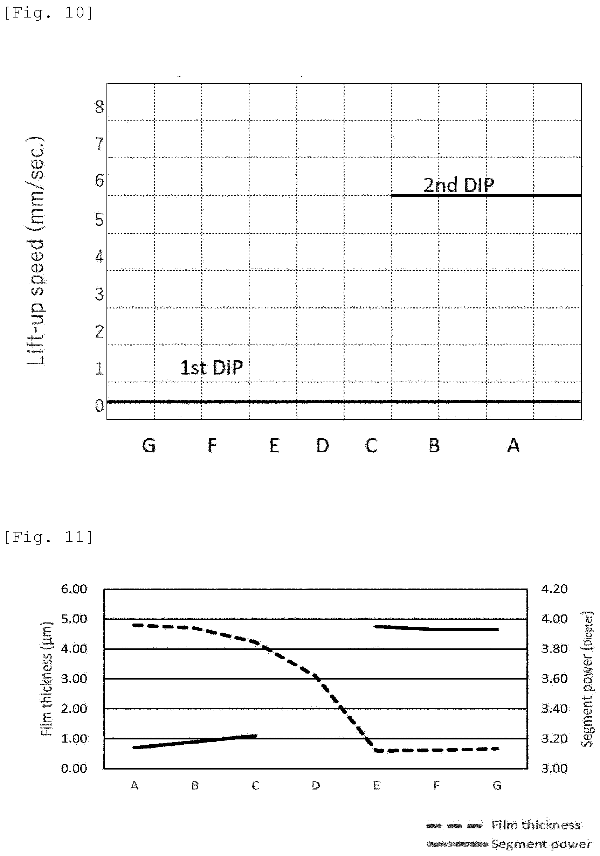

Fig. 10 is a graph showing the relationship between the position of the lens substrate in the Y direction (horizontal axis) and the lifting speed at each corresponding position (vertical axis: mm/sec) according to a first embodiment.
[Fig. 11]
In Fig. 11, the right vertical axis (unit: D) indicates the defocus power of convex regions at specified positions of the spectacle lens according to the first embodiment, the left vertical axis (unit: $\mu$m) indicates the film thicknesses of a hard coat film in the outer clear region and the central clear region of the spectacle lens according to the first embodiment, and the horizontal axis indicates the positions on a vertical line passing through the lens center of the spectacle lens according to the first embodiment.

[Fig. 12]

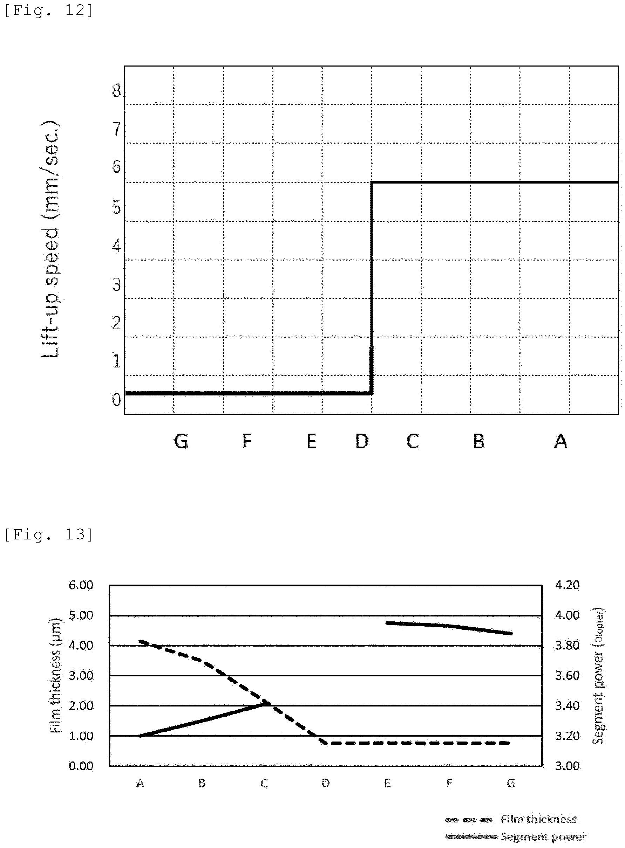

Fig. 12 is a graph showing the relationship between the position of the lens substrate in the Y direction (horizontal axis) and the lifting speed at each corresponding position (vertical axis: mm/sec) according to a second embodiment.

[Fig. 13]

In Fig. 13, the right vertical axis (unit: D) indicates the defocus power of the convex regions at specified positions of the spectacle lens according to the second embodiment, the left vertical axis (unit: $\mu$m) indicates the film thicknesses of the hard coat film in the outer clear region and the central clear region of the spectacle lens according to the second embodiment, and the horizontal axis indicates the positions on the vertical line passing through the lens center of the spectacle lens according to the second embodiment.

[Fig. 14]

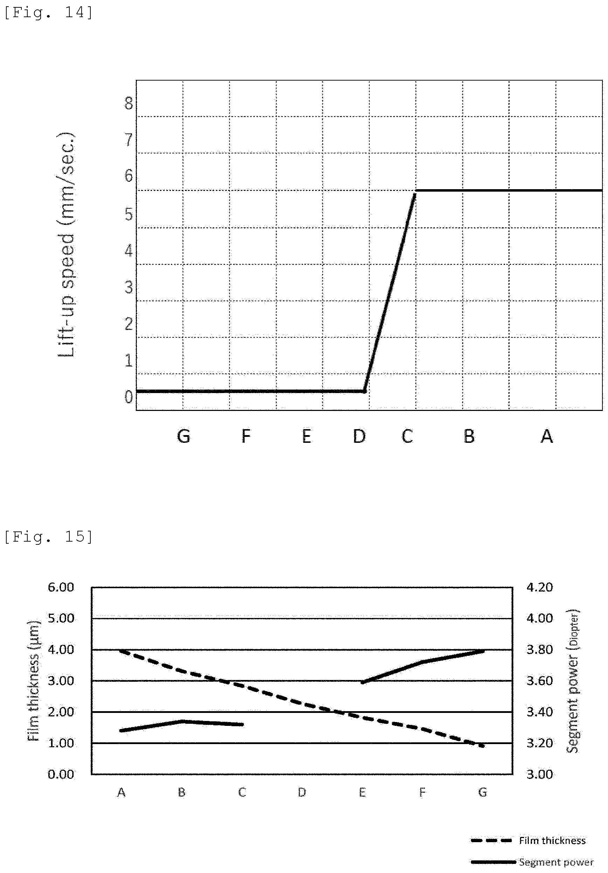

Fig. 14 is a graph showing the relationship between the position of the lens substrate in the Y direction (horizontal axis) and the lifting speed at each corresponding position (vertical axis: mm/sec) according to a third embodiment.

[Fig. 15]

In Fig. 15, the right vertical axis (unit: D) indicates the defocus power of the convex regions at specified positions of the spectacle lens according to the third embodiment, the left vertical axis (unit: $\mu$m) indicates the film thicknesses of the hard coat film in the outer clear region and the central clear region of the spectacle lens according to the third embodiment, and the horizontal axis indicates the positions on the vertical line passing through the lens center of the spectacle lens according to the third embodiment.

[Fig. 16]

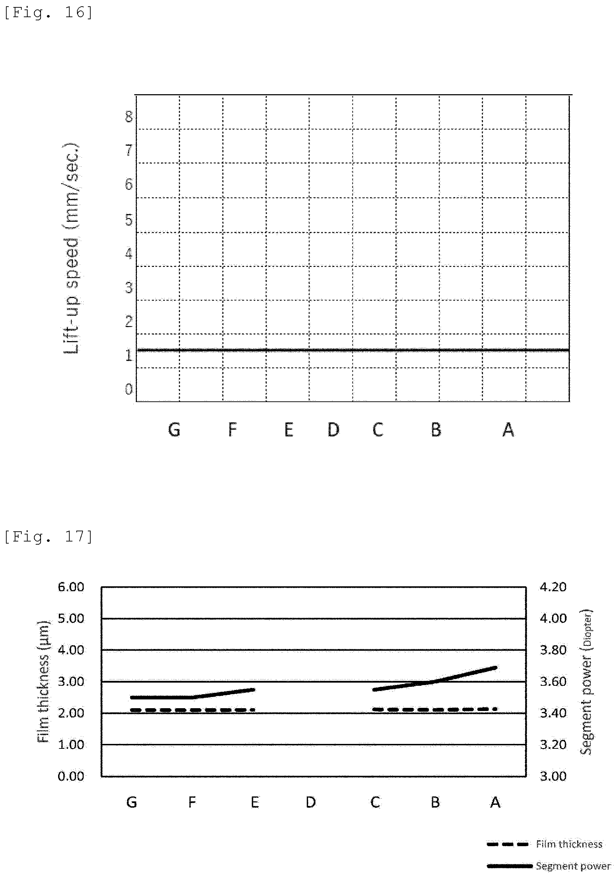

Fig. 16 is a graph showing the relationship between the position of the lens substrate in the Y direction (horizontal axis) and the lifting speed at each corresponding position (vertical axis: mm/sec) according to Comparative Example 1.

[Fig. 17]

In Fig. 17, the right vertical axis (unit: D) indicates the defocus power of the convex regions at specified positions of the spectacle lens according to Comparative Example 1, the left vertical axis (unit: $\mu$m) indicates the film thicknesses of the hard coat film in the outer clear region and the central clear region of the spectacle lens according to Comparative Example 1, and the horizontal axis indicates the positions on the vertical line passing through the lens center of the spectacle lens according to Comparative Example 1.

[Description of Embodiments]

Hereinafter, embodiments of the present invention will be described. The following descriptions based on the drawings are illustrative, and the present invention is not limited to the illustrated aspects. In this specification, the symbol "to" refers to values that are specified numerical values or more and specified numerical values or less.

Fig. 2 is a schematic plan view of a spectacle lens according to one aspect of the present invention.

The spectacle lens described in this specification has an object-side surface and an eye-side surface. The "object-side surface" refers to the surface located on the object side when the spectacles with the spectacle lens are worn by the wearer, while the "eye-side surface" refers to the surface located on the opposite side, that is, on the eye side when the spectacles with the spectacle lens are worn by the wearer. This relationship also applies to the lens substrate that forms the basis of the spectacle lens. In other words, the lens substrate also has the object-side surface and the eye-side surface.

In this specification, the horizontal direction and the up-down (vertical) direction in a state in which the spectacle lens is worn are defined as the X direction and the Y direction, respectively, and the direction corresponding to the thickness direction of the spectacle lens and perpendicular to the X direction and the Y direction is defined as the Z direction. The Z direction also corresponds to the direction of the optical axis of the spectacle lens. The origin is set at the lens center. Note that in this specification, the "lens center" refers to the optical center or the geometric center of the spectacle lens. In this specification, a case in which the optical center and the geometric center substantially coincide with each other will be illustrated. The "geometric center" refers to the center of the circle in the case of a circular shape in plan view, such as an uncut lens before lens shaping, and refers to the center of gravity in plan view in the case of other shapes. Relative to the wearer, the right side is defined as the +X direction, the left side is defined as the -X direction, the upper side is defined as the +Y direction, the lower side is defined as the -Y direction, the object-side direction is defined as the +Z direction, and the opposite direction (depth-side direction) is defined as the -Z direction. In this specification, the "plan view" refers to a state when viewed from the +Z direction to the -Z direction. In each figure of the present application, a case in which a right-eye lens is viewed in plan is illustrated, and the nose-side direction and the ear-side direction when the right-eye lens is worn are defined as the +X direction and the -X direction, respectively.

Note that when a functional region is provided only on the outermost surface on the eye side, a state viewed from the -Z direction to the +Z direction may be defined as plan view. Hereinafter, when discussing "positions," such as an eye point and a geometric center in the spectacle lens, they refer to positions in plan view, unless otherwise specified.

In this specification, the symbol "~" refers to values that are specified numerical values or more and specified numerical values or less.

<Functional Configuration of Spectacle Lens>

The spectacle lens according to one aspect of the present invention includes a central clear region and a functional region.

The central clear region is a portion having a smooth surface shape that is capable of realizing the prescription power of the wearer from a geometric optical standpoint, and is, for example, a portion that is transparent in the visible light wavelength range. The central clear region is a portion that corresponds to the first refraction region in PTL 1.

Furthermore, the central clear region is a region including the lens center and/or an eye point, and is a region that causes a light flux incident from the object-side surface to be emitted from the eye-side surface, enter the pupil of the wearer, and be focused on the retina.

The central clear region according to one aspect of the present invention can realize prescription power (spherical power, cylindrical power, astigmatism axis, or the like). This spherical power may be power to be corrected for frontal vision (for example, distance power, which will be illustrated hereinafter) (where the distance to an object is from infinity to approximately 1 m), or it may be power to be corrected for intermediate vision (1 m to 40 cm) or distance vision (40 cm to 10 cm).

In this specification, for convenience of explanation, the central or upper side of the spectacle lens is referred to as a distance portion, while the lower side of the spectacle lens is referred to as a near portion. The distance portion and the near portion are concepts different from those used in a progressive power lens.

No convex region is provided in the central clear region. The lens center may be referred to as the geometric center or the center of gravity of the central clear region.

The central clear region (and a base region in the functional region, and further an outer clear region) according to one aspect of the present invention function as a so-called single-focal lens.

Incidentally, prescription data on wearer's information is indicated on the lens bag of the spectacle lens. In other words, if there is a lens bag, identification of the spectacle lens as an object is possible on the basis of prescription data on wearer's information. Further, the spectacle lens is usually paired with a lens bag. Accordingly, the technical idea of the present invention is also reflected in spectacle lenses accompanied by a lens bag, and the same applies to a set consisting of a lens bag and a spectacle lens.

The "eye point (EP)" is, for example, a position through which the line of sight passes when the wearer is facing directly forward with the spectacle lens worn, and this example will be illustrated hereinafter. The eye point may also be a position through which the line of sight passes when the wearer visually recognizes an object close to the wearer (i.e., near vision), that is, a near-vision eye point. In one aspect of the present invention, a case will be illustrated in which the geometric center of the spectacle lens before processing for frame insertion coincides with the eye point, the prism reference point, and the lens center. Hereinafter, the spectacle lens before processing for frame insertion will be illustrated as the spectacle lens according to one aspect of the present invention, but the present invention is not limited to this aspect.

The position of the eye point can be identified by referring to a Remark chart or a Centration chart issued by the lens manufacturer.

The functional region is an annular region that is adjacent to and surrounds the central clear region in plan view.

For example, when convex regions are provided in an island shape as in the second refraction areas of PTL 1, while a first refraction area (base region having the same function as that of the central clear region) for realizing prescription power is provided around the convex regions, an annular region including both the base region and the convex regions may be regarded as the functional region.

Furthermore, in the spectacle lens in which the convex regions are formed in a chain-like manner in an annular shape and a plurality of such chained rings are arranged in the radial direction, and in which regions where the convex regions are not formed are regarded as a base region, the region between the chained ring having the minimum diameter and the chained ring having the maximum diameter may be defined as the functional region.

Furthermore, when components having different refractive indices are embedded in the spectacle lens, the annular region between the portion closest to the eye point EP and the portion farthest from the eye point may also be defined as the functional region.

A region composed of a plurality of convex regions that cause a light flux incident from the object-side surface to be emitted from the eye-side surface, while providing positive defocus power to focus a light flux incident on the wearer's pupil at a position in front of the light flux that has passed through the base region is also referred to as a defocus region. This region may also be referred to as a region having power different than the prescription power, that is, a non-focused region on the retina, and may also be a region that does not focus the light flux incident on the wearer's pupil on the retina. Within the functional region, the region excluding the base region is the defocus region.

One aspect of the present invention includes an annular outer clear region that is adjacent to and surrounds the functional region on the outer edge side of the spectacle lens. The outer clear region causes a light flux incident from the object-side surface to be emitted from the eye-side surface, enter the wearer's pupil, and be focused on the retina. In other words, the functional region is an annular region present between the outer clear region and the central clear region.

<Physical Configuration of Spectacle Lens>

The spectacle lens according to one aspect of the present invention includes not only the functional configuration described above but also the following physical configuration.

- A lens substrate having a substrate base portion and a plurality of substrate protrusions protruding from the substrate base portion on its surface.
- A hard coat film that forms the base regions so as to cover the substrate base portion and forms the defocus region so as to cover the plurality of substrate protrusions by covering the lens substrate including the plurality of substrate protrusions.

Note that the materials and other properties of the lens substrate and the hard coat film will be described in detail in <Method for Producing Spectacle Lens> described later.

The lens substrate is not limited as long as it has the substrate base portion and the plurality of substrate protrusions protruding from the substrate base portion.

The substrate base portion is a portion having a shape that is capable of realizing the prescription power of the wearer.

The substrate protrusions are portions corresponding to the minute protrusions described in PTL 1. The spectacle lens according to one aspect of the present invention is capable of suppressing the progression of myopia. Consequently, the lens substrate itself is capable of suppressing the progression of myopia. Similar to the minute convex portions described in PTL 1, the plurality of substrate protrusions according to one aspect of the present invention only need to be formed on at least one of the object-side surface and the eye-side surface of the lens substrate, and this situation is referred to as "protruding from the substrate base portion on the surface of the lens substrate." In this specification, a case in which the plurality of substrate protrusions are provided only on the object-side surface of the lens substrate will mainly be illustrated.

Note that in this specification, a case in which the lens substrate is a plastic lens substrate or a glass lens substrate itself will mainly be illustrated. On the other hand, other substances such as a foundation film may also be laminated on the lens substrate. When the lens substrate has other substances laminated thereon, irregularities resulting from the plurality of substrate protrusions are present on the lens substrate, and the plurality of substrate protrusions refer to those that can exert a myopia progression suppressing effect even when other substances are laminated.

<Characteristics of Spectacle Lens>

In the spectacle lens according to one aspect of the present invention, when the spectacle lens is viewed in plan facing the defocus region, any of the following aspects is satisfied from the lens center toward the outer edge on at least one straight line passing through the lens center of the spectacle lens.

(Aspect 1) The degree to which the hard coat film fills the lens substrate tends to increase and the irregularities between the convex regions and the base region tend to become smoother, or
(Aspect 2) The degree to which the hard coat film fills the lens substrate tends to decrease and the irregularities between the convex regions and the base region tend to become steeper.

These aspects are provided by the hard coat film.

The surface of the spectacle lens is generally a curved surface. Therefore, the protruding direction of the convex regions is not strictly the +Z direction but is defined as the +Z direction for convenience of explanation in this specification.

"The degree to which the hard coat film fills the lens substrate" is represented by the protruding distance of one convex region $\alpha 1$ from a base region $\beta 12$ that is interposed between the convex region $\alpha 1$ and another adjacent (contact or non-contact) convex region $\alpha 2$. In particular, "the degree to which the hard coat film fills the lens substrate" is evaluated on the basis of the maximum value of the protruding distance for each convex region.

For example, as the evaluation based on the maximum value of the protruding distance, according to Aspect 1, the protruding distance may tend to decrease in the following order from the lens center toward the outer edge on one straight line passing through the lens center of the spectacle lens.

- The protruding distance of the convex region $\alpha 1$ from a base region $\beta 12$ that is interposed between the convex region

$\alpha$1 and another convex region $\alpha$2 adjacent in the direction from the lens center toward the outer edge.

- The protruding distance of a convex region $\alpha$2 from a base region $\beta$23 that is interposed between the convex region $\alpha$2 and another convex region $\alpha$3 adjacent in the direction from the lens center toward the outer edge.
- The protruding distance of a convex region $\alpha$3 from a base region $\beta$34 that is interposed between the convex region $\alpha$3 and another convex region $\alpha$4 adjacent in the direction from the lens center toward the outer edge.

The above definition may adopt the protruding distance of the convex region $\alpha$2 relative to the base region $\beta$12 as follows. Specifically, the following definition may be adopted.

- The protruding distance of the convex region $\alpha$2 from the base region $\beta$12 that is interposed between the convex region $\alpha$1 and another convex region $\alpha$2 adjacent in the direction from the lens center toward the outer edge.
- The protruding distance of the convex region $\alpha$3 from the base region $\beta$23 that is interposed between the convex region $\alpha$2 and another convex region $\alpha$3 adjacent in the direction from the lens center toward the outer edge.
- The protruding distance of convex region $\alpha$4 from the base region $\beta$34 that is interposed between the convex region $\alpha$3 and another convex region $\alpha$4 adjacent in the direction from the lens center toward the outer edge.

In the case of Aspect 1, on one straight line passing through the lens center of the spectacle lens, the maximum value of the protruding distance for each convex region tends to decrease from the lens center toward the outer edge. In other words, the degree to which the convex region protrudes from the base region gradually decreases from the lens center toward the outer edge, and the irregularities between the convex regions and the base region tend to become smoother.

More specifically, in a plurality of convex regions present on one straight line passing through the lens center of the spectacle lens, the degree to which the convex regions protrude from the base region gradually decreases from the lens center toward the outer edge. Instead of this specific example, "the degree to which the hard coat film fills the lens substrate" may be defined as follows. Hereinafter, "the degree to which the hard coat film fills the lens substrate" is also simply referred to as the "filling degree."

A plurality of convex regions present on one straight line passing through the lens center of the spectacle lens are identified. As will be described later as one aspect of the present invention, a case is assumed in which each convex region 3a is discretely and independently arranged such that its center is positioned at a vertex of an equilateral triangle in plan view (the center of each convex region is arranged at a vertex of a honeycomb structure: a hexagonal arrangement).

A case is assumed in which other convex regions $\alpha$2 to $\alpha$7 are adjacent to a convex region $\alpha$1 located at the center of a hexagonal arrangement. The average value $(d2 + d3 + d4 + d5 + d6 + d7)/6$ of a protruding distance $d2$ of the convex region $\alpha$2 from a base region $\beta$12 that is interposed between the convex region $\alpha$1 and the convex region $\alpha$2, and respective protruding distances $d3$ to $d7$ obtained in the same manner, may also be defined as the degree to which the hard coat film fills the lens substrate with respect to the convex region $\alpha$1. This degree may also be calculated for each convex region.

Incidentally, when the convex regions within the functional region are in contact with the central clear region or the outer clear region, the filling degree may be defined as follows.

For example, among the convex regions present on one straight line passing through the lens center of the spectacle lens, the convex region $\alpha$1 that is in contact with the central clear region is positioned near the boundary between the functional region and the central clear region. Because no other convex regions are present between the convex region $\alpha$1 and the lens center, it becomes difficult to define the protruding distance. In the case of such a convex region $\alpha$1, the maximum protruding distance of the convex region $\alpha$1 within a range that covers a distance twice the diameter of the convex region $\alpha$1 in the direction toward the lens center along the straight line may be regarded as the "filling degree."

This definition also applies to a convex regions $\alpha$n that is in contact with the outer clear region. In this case, the maximum protruding distance of the convex region $\alpha$n within a range that covers a distance twice the diameter of the convex region $\alpha$n in the direction away from the lens center along the straight line may also be regarded as the "filling degree."

Following the definition of this filling degree, instead of the average value $(d2 + d3 + d4 + d5 + d6 + d7)/6$ as described above, the maximum protruding distance of a convex region within a range that covers a distance twice the diameter of the convex region may be obtained in direction of 360 degrees around the center (or the center of gravity) of the convex region. Then, the average value of the maximum protruding distances at respective rotational angles may also be regarded as the "filling degree."

Actually, it is more accurate to grasp the filling degree in the direction of 360 degrees. However, as described above, the tendency of the filling degree can also be grasped along one straight line passing through the lens center of the spectacle lens, which does not hinder achieving the effects of the present invention.

Note that the "maximum value" may also be adopted instead of the "average value" of the maximum protruding distances described in this specification.

Aspect 1 shows that the filling degree tends to increase and defines a case in which the irregularities between the convex regions and the base region become smoother.

In one aspect of the present invention, provided that the relationship described in Aspect 1 or Aspect 2 is satisfied in the convex regions present on one straight line passing through the lens center of the spectacle lens, a myopia progression suppressing lens that is capable of meeting the conditions required by each wearer through the hard coat film can be provided.

Incidentally, the convex regions present on one straight line passing through the lens center of the spectacle lens may satisfy both Aspect 1 and Aspect 2 simultaneously.

For example, when "one straight line passing through the lens center of the spectacle lens" is a straight line in the Y direction, there may be a case in which the irregularities between the convex regions and the base region tend to become smoother in the +Y direction (upper side) from the lens center in Aspect 1, while the irregularities between the convex regions and the base region tend to become steeper in the -Y direction (lower side) from the lens center in Aspect 2.

However, because the expressions of Aspects 1 and 2 may appear contradictory at first glance, the expression of Aspect 1 "or" Aspect 2 is used in this specification.

The relationship of Aspect 1 or Aspect 2 may be satisfied in the convex regions present on one straight line passing through the lens center of the spectacle lens when the convex regions present on the one straight line account for 80 area% or more (preferably in the following order: 85 area% or more, 90 area% or more, 95 area% or more, 98 area% or more, 99 area% or more, or 100 area%) of the convex regions.

The film thickness of the hard coat film according to the present invention is controlled from a macro-level perspective in which the overall film thickness of the convex regions present on one straight line passing through the lens center of the spectacle lens is controlled, rather than from a micro-level perspective in which the film thickness around one convex region is controlled. Therefore, this specification describes that the filling degree "tends" to increase or decrease, and the irregularities "tend" to become smoother or steeper. As long as the above content is satisfied as a trend, the overall situation will not be affected even if there is a film thickness of one irregular convex region.

The relationship of Aspect 1 or Aspect 2 may be satisfied when the total rotational angle across 360 degrees from the center (or the center of gravity) of a convex region is a specified value or more and a specified value or less. The lower limit may be 10, 20, 30, 40, 50, 60, 70, 80, 90, 100, 110, 120, 130, 140, 150, 160, or 170 degrees. The upper limit may be any value from 360 degrees to 10 degrees.

The aspect of "the filling degree increases" is not limited, as long as the film thickness of the hard coat film at the outer edge of the lens is greater than that of the hard coat film at the lens center on at least one straight line passing through the lens center of the spectacle lens. Preferably, the filling degree does not decrease from the lens center toward the outer edge. Even if the filling degree decreases from the lens center toward the outer edge, the rate of decrease in the film thickness of the hard coat film from the lens center is preferably less than 5% (more preferably less than 3%, less than 2%, or less than 1%). A state in which the filling degree does not decrease, or decreases only slightly as described above is also referred to as a monotonic increase in this specification.

For example, among the convex regions of the spectacle lens, the filling degree of a convex region (part 2) that is adjacent in the -Y direction to a convex region (part 1) located farthest in the +Y direction is made greater than that of the convex region (part 1). Further, the filling degree of a convex region (part 3) that is adjacent in the -Y direction to the convex region (part 2) is made greater than that of the convex region (part 2). In this manner, the filling degree may be continuously increased from the upper side to the lower side.

Alternatively, while the filling degree of the convex region (part 1) and the filling degree of the convex region (part 2) that is adjacent in the -Y direction to the convex region (part 1) are made equal, the filling degree of the convex region (part 3) that is adjacent in the -Y direction to the convex region (part 2) may be made greater than that of the convex region (part 2). In this manner, the filling degree may be increased discontinuously from the upper side to the lower side.

The following is an index for quantitatively representing the aspect in which "the filling degree increases."

In the case of Aspect 1, the ratio (Lc/L1) of the filling degree (maximum protruding distance) Lc of the convex region to the maximum protruding distance L1 of the substrate protrusion decreases from the lens center toward the outer edge on at least one straight line passing through the lens center of the spectacle lens. The aspect of the decrease may be continuous or discontinuous. Note that the following relationship is preferably maintained in any of the convex regions.

$$0.6 \leqq Lc/L1 \leqq 1.5... \text{ (Formula 1)}$$

If this condition is met, even if a coating film is formed on the substrate protrusions, the convex regions derived from the substrate protrusions can sufficiently shift the convergence position B of the light beam incident on the spectacle lens 1 to the object side with respect to the specified position A. This means that the convex regions, and consequently, the spectacle lens 1 according to one aspect of the present invention can exhibit a sufficient myopia suppression effect.

Note that the protruding distance Lc of the convex regions refers to the distance in the optical axis direction (lens thickness direction, Z-axis) from the base region of the outermost surface shape of the spectacle lens 1 to the vertex of the convex regions. The protruding distance Ll of the substrate projections refers to the distance in the optical axis direction (lens thickness direction, Z-axis) from the substrate base portion 30b of the lens substrate to the vertex of the substrate protrusion 30a.

In Aspect 2, contrary to Aspect 1, this filling degree tends to decrease, and a case is defined in which the irregularities between the convex regions and the base region tend to become steeper.

The aspect of "the filling degree decreases" is not limited, as long as the film thickness of the hard coat film at the outer edge of the lens is smaller than that of the hard coat film at the lens center on at least one straight line passing through the lens center of the spectacle lens. Preferably, the filling degree does not increase from the lens center toward the outer edge. Even if the filling degree increases from the lens center toward the outer edge, the rate of the increase in the film thickness of the hard coat film from the lens center is preferably less than 5% (more preferably less than 3%, less than 2%, or less than 1%). A state in which the filling degree does not increase, or increases only slightly as described above is also referred to as a monotonic decrease in this specification.

For example, among the convex regions of the spectacle lens, the filling degree of the convex region (part 2) that is adjacent in the -Y direction to the convex region (part 1) located farthest in the +Y direction is made smaller than that of the convex region (part 1). Further, the filling degree of the convex region (part 3) that is adjacent in the -Y direction to the convex region (part 2) is made smaller than that of the convex region (part 2). In this manner, the filling degree may be continuously decreased from the upper side to the lower side.

Alternatively, while the filling degree of the convex region (part 1) and the filling degree of the convex region (part 2) that is adjacent in the -Y direction to the convex region (part 1) are made equal, the filling degree of the convex region (part 3) that is adjacent in the -Y direction to the convex region (part 2) may be made smaller than that of the convex region (part 2). In this manner, the filling degree may be decreased discontinuously from the upper side to the lower side.

The following is an index for quantitatively representing the aspect in which "the filling degree decreases."

In the case of Aspect 2, the ratio (Lc/L1) of the filling degree (maximum protruding distance) Lc of the convex regions to the maximum protruding distance Ll of the substrate protrusions tends to increase from the lens center toward the outer edge on at least one straight line passing through the lens center of the spectacle lens. The aspect of the increase may be continuous or discontinuous. Note that the relationship of the above Formula 1 is preferably maintained in any of the convex regions.

<Examples in Which Characteristics of Spectacle Lens Are Made to Address Each Case>

Examples made to address each case described in the section of "Technical Problem" of the present invention will be described below.

(Case 1)

Fig. 3 is a schematic view of the upper side of the YZ cross-section of the spectacle lens according to one aspect of the present invention addressing Case 1.

Case 1 refers to a case in which some wearers request, during frontal vision (for example, distance vision), a view similar to those provided by ordinary spectacle lenses. Aspect 1 described above may be utilized to address Case 1.

Specifically, in plan view of the spectacle lens, a configuration may be adopted in which, on at least one straight line passing through the lens center of the spectacle lens (which is also the center of the central clear region), the degree to which the hard coat film fills the lens substrate tends to increase from the lens center toward the +Y direction, that is, toward the distance portion located on the upper side within the outer edge, and in which the irregularities between the convex regions and the base region tend to become smoother.

By adopting this configuration, the irregularities between the convex regions and the base region (almost) disappear in the center or the distance portion on the upper side (+Y direction) of the spectacle lens. The fact that the irregularities disappear means that, in at least the distance portion, there is not much difference, in terms of the surface configuration (the object-side surface and the eye-side surface) of the spectacle lens, between the spectacle lens and a normal spectacle lens that is not a myopia progression suppressing lens, that is, a spectacle lens in which substrate protrusions 30a are not provided on the lens substrate. In other words, in the distance portion where the irregularities become smooth, visibility similar to that of a normal spectacle lens can be expected. As a result, the request in Case 1 can be satisfied. In addition, because this request is not realized by injection molding but is realized by the hard coat film, cost and time can be reduced significantly.

Note that, in a case in which the spectacle lens according to one aspect of the present invention is a single-focal lens and an uncut lens before lens shaping, a direction indicating portion that indicates the direction of the spectacle lens when worn is provided. If the direction indicating portion is provided, an operator can recognize the wearing direction during lens shaping, and the lens can be mounted in the frame of the spectacles such that the defocus power of the convex regions increases from the upper side to the lower side of the spectacle lens when worn.

The aspect of this direction indicating portion is not limited, and it may be a symbol or a character. Furthermore, a marking may be provided on the lens substrate or another substance (for example, a hard coat film or an anti-reflection film). Furthermore, in plan view of the spectacle lens, the position where the direction indicating portion is provided is not limited to the inside or outside of the frame (lens shaping). Furthermore, the direction indicating portion is not limited to a symbol or character marking. In a case in which the spectacle lens includes a gradation such as color in a specified direction, the gradation serves as the direction indicating portion.

In a case in which the spectacle lens according to one aspect of the present invention is a progressive power lens, the progressive power lens is provided with a hidden mark that allows for the identification of the positions of an eye point, an optical center, a distance power measurement reference point, a near power measurement reference point, and the like. Therefore, even an uncut lens before lens shaping allows for the identification of the direction when worn. In other words, this hidden mark is included in the direction indicating portion.

The configuration of one aspect of the present invention that reflects the above-described direction indicating portion described above is as follows.

"A configuration in which a direction indicating portion that indicates the direction of the spectacle lens when worn is provided, wherein

the degree to which the hard coat film fills the lens substrate tends to increase and the irregularities between the convex regions and the base region tend to become smoother from the lens center toward an upper outer edge, and the degree to which the hard coat film fills the lens substrate tends to decrease and the irregularities between the convex regions and the base region tend to become steeper from the lens center toward a lower outer edge."

Incidentally, the configuration described in the upper paragraph is preferably satisfied on a straight line other than the horizontal line passing through the lens center of the spectacle lens. However, the aspect addressing Case 3 described later is not limited to the configuration described in this paragraph.

(Case 2)

Fig. 4 is a schematic view of the lower side of the YZ cross-section of the spectacle lens according to one aspect of the present invention addressing Case 2.

Case 2 addresses a situation in which the apparent power decreases in near vision. Aspect 2 described above may be utilized to address Case 2.

Specifically, in plan view of the spectacle lens, a configuration may be adopted in which, on at least one straight line passing through the lens center of the spectacle lens (which is also the center of the central clear region), the degree to which the hard coat film fills the lens substrate tends to decrease from the lens center toward the -Y direction, that is, toward the near portion located on the lower side within the outer edge, and in which the irregularities between the convex regions and the base region tend to become steeper.

By adopting this configuration, the irregularities between the convex regions and the base region tend to become steeper in the near portion on the lower side (-Y direction) of the spectacle lens. The fact that the irregularities become steeper means that each convex region on the lower side of the spectacle lens satisfactorily follows the shape of each substrate protrusion of the lens substrate, because the liquid pools of the hard coat liquid are eliminated. As a result, the convex regions on the lower side of the spectacle lens exhibit defocus power close to that set in the respective substrate protrusions of the lens substrate. The fact that the degree to which the hard coat film fills the lens substrate decreases from the lens center toward the lower side means that the defocus power of the convex regions increases. As a result, the request in Case 2 can be satisfied. In addition, because this request is not realized by injection molding but is realized by the hard coat film, cost and time can be reduced significantly.

Note that the definition of "the defocus power of the convex regions increases from the upper side to the lower side of the spectacle lens when worn" is as follows.

"From the upper side to the lower side" includes, but is not limited to, the Y direction, which represents a straight line in plan view and extends from the +Y direction to the -Y direction. In a broad sense, "from the upper side to the lower side" refers to a direction other than the X direction in plan view. Preferably, "from the upper side to the lower side" refers to a range of directions extending from directions within $\pm$ 60 degrees (or 45 degrees, 30 degrees, or 15 degrees) in the +Y direction toward directions within $\pm$ 60 degrees (or 45 degrees, 30 degrees, or 15 degrees) in the -Y direction. Hereinafter, for convenience of explanation, the direction from the +Y direction toward the -Y direction will be illustrated.

The aspect of "the defocus power of the convex regions increases" is not limited, provided that the defocus power does not decrease. As one specific example of "the defocus power of the convex regions increases from the upper side to the lower side of the spectacle lens when worn," the convex region that provides the maximum value of the defocus power and the convex region that provides the minimum value of the defocus power among those located on the vertical line passing through the lens center are the lowermost convex region and the uppermost convex region, respectively.

For example, among the convex regions of the spectacle lens, the defocus power of a convex region (part 2) that is adjacent in the -Y direction to a convex region (part 1) located farthest in the +Y direction is made greater than that of the convex region (part 1). Further, the defocus power of a convex region (part 3) that is adjacent in the -Y direction to the convex region (part 2) is made greater than that of the convex region (part 2). In this manner, the defocus power may be continuously increased from the upper side to the lower side.

Alternatively, while the defocus power of the convex region (part 1) and the defocus power of the convex region (part 2) that is adjacent in the -Y direction to the convex region (part 1) are made equal, the defocus power of the convex region (part 3) that is adjacent in the -Y direction to the convex region (part 2) may be made greater than that of the convex region (part 2). In this manner, the defocus power may be increased discontinuously from the upper side to the lower side.

By adopting the above-described configuration, the increase in the defocus power can serve as compensation. As a result, a decrease in the apparent power during near vision can be suppressed. As will be described in detail later, this increase in the defocus power of the convex regions is realized through the hard coat film.

(Addressing Cases 1 and 2)

Fig. 5 is a schematic view of the YZ cross-section of the spectacle lens according to one aspect of the present invention addressing Cases 1 and 2.

By adopting <Method for Producing Spectacle Lens> described later, it becomes possible to address Cases 1 and 2. The configuration can be expressed as follows.

"On the one straight line,

the degree to which the hard coat film fills the lens substrate tends to increase and the irregularities between the convex regions and the base region tend to become smoother from the lens center toward one outer edge, and

the degree to which the hard coat film fills the lens substrate tends to decrease and the irregularities between the convex regions and the base region tend to become steeper from the lens center toward another outer edge."

In the examples of Cases 1 and 2, when "one straight line passing through the lens center of the spectacle lens" is a straight line in the Y direction, the irregularities between the convex regions and the base region tend to become smoother in the +Y direction (upper side) from the lens center in Aspect 1 described above, while the irregularities between the convex regions and the base region tend to become steeper in the -Y direction (lower side) from the lens center in Aspect 2 described above.

(Case 3)

Case 3 refers to a case in which the defocus power is set in consideration of the difference in power between the upper and lower portions of the wearer's eye. Aspects 1 and 2 described above may be utilized to address Case 3.

Fig. 6 is a plan distribution view of the defocus power to be set so as to cancel out a difference in power between the upper and lower portions of the wearer's eye in Case 3, showing that the defocus power becomes greater as the color becomes denser.

The plan distribution view of the defocus power shown in Fig. 6 cannot be readily achieved by simply immersing into the hard coat liquid in one direction. More specifically, as will be described in detail later in <Method for Producing Spectacle Lens>, the plan distribution view of the defocus power shown in Fig. 6 can be achieved by performing an immersion step in the hard coat liquid multiple times. As an example, the lens substrate is tilted within the XY plane for each immersion step. As a result, as shown in the plan distribution view of the defocus power in Fig. 6, a fan-shaped region can be formed in which the defocus power has been increased or decreased in the radial direction.

<Preferred Examples and Modified Examples of Spectacle Lens 1>

Preferred examples and modified examples of the spectacle lens 1 according to one aspect of the present invention will be described below.

Among the convex regions in the spectacle lens, the value of the defocus power [unit: D] of 80% or more (preferably in the following order: 85% or more, 90% or more, 95% or more, 98% or more, or 99% or more) of the convex regions is preferably 0.102 $\mu$m $\times$ 8/(diameter [unit: mm] of the convex regions)^2 or more.

The process of deriving the above-described definition will be described. First, an optically significant change in the amount of defocus is considered. In optical theory, it is considered that a significant change occurs when the Strehl ratio (the relative ratio of spot intensity to its ideal value) becomes 0.8 or less.

This corresponds to 1/14$\lambda$ when converted into the RMS value of the wavefront aberration. If the wavelength is set to $\lambda = 0.420$ $\mu$m, which is the sensitivity peak of the blue cone, the above value 1/14$\lambda$ becomes 0.030 $\mu$m. Furthermore,

the RMS value of the wavefront aberration is converted into a PV value (which corresponds to a relative shape error in the peripheral area with respect to the center of the segment). The RMS of the defocus component of the Zernike polynomial is defined to be equal to $1/(2\sqrt{3})$ times the PV value. Accordingly, it can be said that a significant change occurs if wavefront aberration is given such that PV value becomes 0.030 $\mu$m $\times$ $2\sqrt{3}$ = 0.102 um. The wavefront aberration of 0.102 $\mu$ is converted into the following power change amount.

Power change amount [unit: D] = 0.102 $\mu$m $\times$ 8/(diameter of the convex regions [unit: mm])^2

As an example, the power change amount is 0.816 D if a segment has a diameter of 1 mm.

The central clear region that is surrounded by the functional region and includes the eye point may be further provided, wherein the central clear region causes a light flux incident from the object-side surface to be emitted from the eye-side surface, enter the wearer's pupil, and be focused on the retina to achieve the wearer's prescription power.

The size and shape of the central clear region 2 are not limited. As one guideline for the lower limit of the size of the central clear region 2, it may be sufficient if the region can encompass a circle having a diameter of 5.00 mm about the eye point EP. As one guideline for the upper limit of the size of the central clear region 2, it may be sufficient if the region can fit within a circle having a diameter of 10.00 mm about the eye point EP. The minimum value of the horizontal distance from the eye point EP to the edge of the central clear region 2 (i.e., the minimum radius when the clear region is circular in plan view) may be 3.60 mm or less. The area of the central clear region 2 may be 80 mm$^2$ or less. The shape of the central clear region 2 may be circular, rectangular, oval, or the like in plan view. By adopting the configuration described in the present paragraph, sufficiently good visibility can be obtained during frontal vision.

The "aggregate of clear pupil circles" may be referred to as the shape of the central clear region 2. Specifically, in plan view, in a circle having a radius of r [mm], the center of which lies on a horizontal line passing through the eye point EP within the central clear region 2, the value 2r corresponds to the pupil diameter when r is at least one value in the range from 1.50 or more to 2.50 or less (particularly r = 1.50 or 2.00). In this specification, this circle is also referred to as a "clear pupil circle."

The size and shape of the functional region 3 are not limited. As one guideline for the lower limit of the size of the functional region 3, it may be sufficient if the region can encompass a circumference having a diameter of 15.00 mm about the eye point EP. As one guideline for the upper limit of the size of the functional region 3, it is sufficient if the region can encompass a circumference having a diameter of 50.00 mm about the eye point EP. The shape of the functional region 3 is annular in plan view, and the ring may have a circular shape, a rectangular shape, an oval shape, or the like, or a combination thereof on the inner side (i.e., the boundary between the central clear region 2 and the functional region 3) and/or the outer side (i.e., the boundary between the outer clear region 4 and the functional region 3).

As one guideline, it may be defined that 30% or more (or 40% or more, 50% or more, or 60% or more) of the light flux incident on the wearer's pupil is not focused on the retina in the functional region 3. If the value of the percentage is large, the myopia progression suppressing effect is expected to increase, while the visibility decreases. The value of the percentage may be appropriately determined in consideration of the balance between the myopia progression suppressing effect and the visibility. The upper limit may be, for example, 70%.

In other words, in the functional region 3, the area of the convex regions 3a in plan view may be defined as 20% or more (or 30% or more, 40% or more, 50% or more, or 60% or more) of the entire functional region 3. The upper limit may be, for example, 80%. The defocus regions 3a may be arranged so as to become sparser or denser toward the outer edge of the functional region 3.

In plan view, the area of the defocus regions 3a provided within the functional region 3 relative to the entire area of the spectacle lens 1 is preferably 20% or less (or 15% or less, or 10% or less). The lower limit may be, for example, 5% or more.

In plan view, the area (area ratio) of the defocus regions 3a provided within the functional region 3 to the area of the defocus regions 3a in the entire spectacle lens 1 is preferably 80% or more. This area ratio is preferably 85% or more, 90% or more, 95% or more, 98% or more, and 99% or more in this order.

The outer clear region that serves as an annular region surrounding the functional region on the outer edge side of the spectacle lens may be further provided, wherein the outer clear region causes a light flux incident from the object-side surface to be emitted from the eye-side surface, enter the wearer's pupil, and be focused on the retina to achieve the wearer's prescription power.

In that case, the functional region 3 serves as an annular region that is present between the outer clear region 4 and the central clear region 2. The "aggregate of clear pupil circles" may also be referred to as the shape of the outer clear region 4. Further, in the spectacle lens 1, the region excluding the central clear region 2 and the outer clear region 4 may be defined as the functional region 3.

The outer clear region 4 may be annular, or may have a shape that forms only a portion of the ring. In other words, one portion of the functional region 3 may contact the outer edge of the spectacle lens 1, while another portion of the functional region 3 may contact the outer clear region 4. Furthermore, the spectacle lens 1 according to one aspect of the present invention may be the spectacle lens 1 after being inserted into a frame, and one portion of the functional region 3 in the spectacle lens 1 may contact the outer edge of the spectacle lens 1, while another portion of the functional region 3 may contact the outer clear region 4.

Furthermore, providing another functional region 3 on the outer edge side of the outer clear region 4 is not precluded. However, in consideration of facilitating good visibility even in the peripheral visual field, it is preferable that no convex regions 3a be provided between the outer edge of the spectacle lens 1 and the functional region 3. In other words, it is preferable that the entire region between the outer edge and the functional region 3 in the spectacle lens 1 form the outer clear region 4.

The effects of the present invention are achieved even if all the convex regions in the functional region do not necessarily satisfy the condition "the defocus power increases from the upper side to the lower side of the spectacle lens when worn." Following the descriptions of Aspects 1 and 2 described above, this is also referred to as "the defocus power tends to increase."

For example, provided that the number (number ratio) of the convex regions that satisfy the definition described in this paragraph accounts for 80% or more (preferably in the following order: 85% or more, 90% or more, 95% or more, 98% or more, or 99% or more) of the number of all the convex regions in the functional region, the likelihood of achieving the effects of the present invention increases. The number ratio is preferably 85% or more, 90% or more, 95% or more, 98% or more, and 99% or more in this order.

In other words, provided that the area (area ratio) of the convex regions that satisfy the definition described in this paragraph accounts for 80% or more of the total area of all the convex regions in the functional region, the likelihood of achieving the effects of the present invention increases. This area ratio is preferably 85% or more, 90% or more, 95% or more, 98% or more, and 99% or more in this order.

The defocus power of 80% or more (preferably in the following order: 85% or more, 90% or more, 95% or more, 98% or more, and 99% or more) of the convex regions in the spectacle lens is not limited but may be in the range of, for example, 3.0 to 5.0 D.

The defocus power of 80% or more (preferably in the following order: 85% or more, 90% or more, 95% or more, 98% or more, and 99% or more) of the substrate protrusions in the lens substrate may fall within the range of $\pm$ 0.12 D (preferably in the following order: $\pm$ 0.10 D, $\pm$ 0.08 D, $\pm$ 0.06 D, $\pm$ 0.04 D, $\pm$ 0.02 D, and $\pm$ 0.01 D).

The definition described in the above paragraph refers to the variation width of the defocus power for each substrate protrusion in the defocus power provided in the substrate protrusions.

For example, in design, when the defocus power of all the substrate protrusions is 3.50 D, the defocus power of 80% or more of the substrate protrusions falls within the range of 3.50 $\pm$ 0.12 D.

This variation width may be set to $\pm$ 0.12 D relative to the average value of the defocus power of all the substrate protrusions.

Furthermore, this variation width may be set to less than 5%, less than 3%, less than 2%, or less than 1% of the average value of the defocus power of all the substrate protrusions.

Furthermore, in consideration of $\pm$ 0.12 D, it may also be expressed that the substrate protrusions in which the difference between the maximum and minimum values of the defocus power falls within 0.24 D accounts for 80% or more.

According to this configuration, it becomes clearer that while the defocus power of the multiple substrate protrusions remains almost constant, the defocus power of the convex regions tends to increase from the upper side to the lower side of the spectacle lens with the formation of the hard coat film.

Generally, a cornea vertex distance L of children's spectacles is considered to be 12 mm, but there are many examples in which it is set to approximately 10 mm or 15 mm. Furthermore, a distance T during near vision ranges from at least approximately 250 mm to 500 mm. When this is applied to the above Formula, the defocus power to be provided to the lower portion of the lens becomes approximately 1.02 to 1.06 times the original defocus power.

As described in the section of "Solution to Problem" of the present invention, during viewing of the myopia progression suppressing lens in near vision, when the defocus power of each convex region located at a position through which the line of sight passes is increased in advance, the apparent power during near vision becomes approximately equal to the original power if the power is increased by $(1 + L/S)^2$ times. However, considering that the lower portion of the lens is not always used for near vision and is used for distance vision during walking or the like, it is well balanced to increase the power by $(1 + L/S)$ times, which is an intermediate value between one time and $(1 + L/S)^2$ times. In the foregoing case, it is preferable to increase the defocus power by 1.04 times.

Because values of approximately 1.02 to 1.06 times, as well as a value of 1.04 times, are balanced values considering the fact that both near vision and distance vision are performed in the lower portion of the lens as described above. Therefore, for children who use the lens only for near vision, a squared value (1.04 to 1.12) may be adopted to completely compensate for a decrease in apparent power. Furthermore, for children who rarely engage in near vision, a square root value (1.01 to 1.03), which further reduces the correction effect by half may be adopted.

In other words, when the defocus power of the convex regions increases from the upper side to the lower side of the spectacle lens, the lower limit of the increase ratio (the ratio (%) of the difference between the maximum and minimum values to the minimum value of the defocus power of the convex regions on the vertical line passing through the lens center) may be a value between 1 and 3%, and the upper limit thereof may be a value between 4 and 12%.

The defocus power of the convex regions is preferably 3.0 to 5.0 D. Therefore, when the defocus power of the convex regions increases from the upper side to the lower side of the spectacle lens, the lower limit of the increase amount (the difference between the maximum and minimum values of the defocus power of the convex regions on the vertical line passing through the lens center) may be a value between 0.03 and 0.10 D, and the upper limit thereof may be a value between 0.12 and 0.60 D.

It can be said that the increase in the defocus power of the convex regions described in the above paragraph occurs as the defocus power of the convex regions approaches the defocus power of the substrate protrusions underlying the hard coat film in the convex regions from the upper side to the lower side of the spectacle lens when worn.

As described in the findings of the present invention, one aspect of the present invention is that the hard coat film suppresses a decrease in apparent power during near vision. When the dip method is employed, the defocus power of the convex regions arranged on the upper side tends to be higher than that of the convex regions arranged on the lower side during immersion in the hard coat liquid, as will be described in the sections of the embodiments given later. This tendency also appears even when the difference in the film thickness of the hard coat film between the central clear region and the outer clear region that sandwich the functional region therebetween is small. This difference in the film thickness may be defined as follows.

"The difference in the average film thickness of the hard coat film between the central clear region and the outer clear region is within 10% (or within 8%, 5%, or 3%)."

<One Specific Example of Spectacle Lens 1>

The aspect of the arrangement of the convex regions is not particularly limited, and can be determined, for example, from the viewpoint of the visibility of the convex regions from the outside, the impartation of design characteristics by the convex regions, the adjustment of power by the convex regions, and the like. Note that the convex regions are an example of defocus regions, and are composed of a plurality of convex regions that cause a light flux incident from the object-side surface to be emitted from the eye-side surface, while providing positive defocus power to focus the light flux incident on the wearer's pupil at a position in front of the light flux that has passed through the base region. As one specific example, the convex regions do not focus a light flux on the retina, but focus the light flux at a position (+Z direction side) in front of the retina. Hereinafter, this specific example will now be described.

In the functional region 3 arranged around the central clear region 2 of the spectacle lens 1, substantially circular convex regions may be arranged in an island shape (i.e., in a state in which they are spaced apart from each other without being adjacent) at even intervals in both the circumferential and radial directions. As one example of the arrangement of the convex regions in plan view, each convex region 3a is discretely and independently arranged such that its center is positioned at a vertex of an equilateral triangle (the center of each convex region is arranged at a vertex of a honeycomb structure: a hexagonal arrangement). In this case, the interval between the convex regions may be 1.0 to 2.0 mm. Furthermore, the number of the convex regions (consequently, the defocus regions) may be 10 to 200.

In the functional region 3, the convex regions are an example of a configuration (defocus regions) that achieves the myopia progression suppressing effect.

The convex regions are regions in which, from a geometrical optics viewpoint, at least a part does not focus light on the light focusing position by the base region 3b. The convex regions are portions corresponding to the minute convex portions described in PTL 1. The spectacle lens 1 according to one aspect of the present invention is a myopia progression suppressing lens, similar to the spectacle lens described in PTL 1. Similar to the minute convex portions described in PTL 1, the plurality of convex regions according to one aspect of the present invention only need to be formed on at least one of the object-side surface and the eye-side surface of the spectacle lens 1. In this specification, a case in which the plurality of convex regions are provided only on the object-side surface of the spectacle lens 1 will mainly be illustrated. Hereinafter, unless otherwise indicated, a case in which the convex regions have a curved surface shape that protrudes toward the outside of the lens will be illustrated.

It is preferable that half or more of the plurality of convex regions (all the convex regions within the functional region) be arranged at equal intervals in plan view. One example of a pattern with equal intervals is an equilateral triangle arrangement (where the centers of the convex regions are arranged at the vertexes of an equilateral triangle net) in plan view. Preferably 80% or more, more preferably 90% or more, and still more preferably 95% or more of the convex regions are arranged. Hereinafter, preferred examples of "half or more (or 80% or more) of all the convex regions within the functional region" are given in the preferred order of 80% or more, 90% or more, and 95% or more similar to the above, and their duplicated description will be omitted.

The convex regions may have a spherical shape, an aspherical shape, a toric surface shape, or a mixed shape of these shapes (for example, the central portion of each convex region has a spherical shape, and the peripheral portion outside the central portion has an aspherical shape). The boundary between the central portion and the peripheral portion may be provided at a location corresponding to one-third to two-thirds of the radii of the convex regions in plan view. However, it is preferable that at least the central portions of the convex regions have a convex curved surface shape protruding toward the outside of the lens. Furthermore, because half or more of the plurality of convex regions (all the convex regions within the functional region) are preferably arranged at equal intervals in plan view, it is preferable that the convex regions have a spherical shape.

Each convex region is configured, for example, as follows. The diameter of the convex regions is preferably approximately 0.6 to 2.0 mm in plan view. The surface area of each convex region may be approximately 0.50 to 3.14 mm². The radius of curvature of the convex regions 3a is approximately 50 to 250 mm, and is preferably approximately 86 mm in a spherical shape.

The specific numerical value of the defocus power in each convex region is not limited. However, for example, the minimum value of the defocus power provided by the convex regions on the spectacle lens 1 is preferably in the range of 0.50 to 4.50 D, and the maximum value thereof is preferably in the range of 3.00 to 10.00 D. The difference between the maximum value and the minimum value is preferably in the range of 1.00 to 5.00 D.

The "defocus power" refers to the difference between the power of each convex region and the power of a portion other than each convex region. In other words, the "defocus power" is the difference obtained by subtracting the power of the base region from the average value of the minimum power and the maximum power at a specified location in the convex region.

In this specification, the "power" refers the average power, which is the average value of the power in the direction in which the power becomes minimum and the power in the direction (direction perpendicular to the direction) in which the power becomes maximum.

The lens substrate is made of, for example, a thermosetting resin material such as thiourethane, aryl, acrylic, or epithio, or a thermoplastic resin material such as polycarbonate. Note that as the resin material for forming the lens substrate, another resin material capable of obtaining a desired refractive index may also be selected. Furthermore, the lens substrate may be made of inorganic glass instead of a resin material.

The hard coat film is formed by using, for example, a thermosetting resin, a thermoplastic resin, or a UV-curable resin. The hard coat film can be formed by using a method for immersing the lens substrate in the hard coat liquid, spin coating, or the like. The application of such a hard coat film can enhance the durability of the spectacle lens 1.

The anti-reflection film is formed by, for example, depositing an anti-reflection agent such as $ZrO_2$, $MgF_2$, $Al_2O_3$, or $SiO_2$ through a vacuum-deposition method, an ion plating method, a sputtering method, or the like. The application of such an anti-reflection film can enhance the visibility of an image through the spectacle lens 1.

One or more coating films can also be formed on the anti-reflection film. Examples of such coating films include various coating films such as water-repellent or hydrophilic anti-fouling films and anti-fogging films. Known techniques can be applied as methods for forming these coating films.

The film thickness of the hard coat film may be, for example, in the range of 0.1 to 100 $\mu$m (preferably in the range of 0.5 to 5.0 $\mu$m, and more preferably in the range of 1.0 to 3.0 $\mu$m). However, the film thickness of the hard coat film should be determined according to its required functions and is not limited to the exemplified ranges. The definition of the film thickness in this paragraph is also applicable to the entire coating film formed by a combination of various films provided on the lens substrate.

<Spectacles>

The technical idea of the present invention is also reflected in spectacles in which the vicinity of the peripheral edge of the spectacle lens 1 is cut on the basis of a specified frame shape and the spectacle lens 1 is mounted in the frame. The type, shape, and the like of the frame are not limited, and the frame may be of a full rim, half rim, under rim, or rimless type. In other words, the technical idea of the present invention is also reflected in spectacles in which the spectacle lens according to one aspect of the present invention is mounted in the frame.

Note that the vertical direction of the spectacle lens has already been fixed when it is assembled into spectacles. Therefore, when assembled into spectacles, the spectacle lens mounted in the frame does not need to include a direction indicating portion.

The following is a configuration that reflects one specific example of the spectacle lens according to one aspect of the present invention.

"The spectacles in which, when the spectacle lens is viewed in plan facing the defocus regions, the degree to which the hard coat film fills the lens substrate tends to increase and the irregularities between the convex regions and the base region tend to become smoother toward the upper side."

<Method for Producing Spectacle Lens>

A method for producing the spectacle lens according to one aspect of the present invention will be described. Content not described below may be understood with reference to the previously-described content related to the spectacle lens.

Fig. 7 is a schematic flow diagram of the method for producing the spectacle lens according to one aspect of the present invention.

In the method for producing the spectacle lens according to one aspect of the present invention, at least the following steps are performed.

- An immersion step of immersing the lens substrate in the hard coat liquid, the lens substrate having the substrate base portion and the plurality of substrate protrusions protruding from the substrate base portion on its surface.
- A lifting step of lifting the lens substrate from the hard coat liquid.
- A drying step of obtaining the hard coat film that forms the base region so as to cover the substrate base portion and forms the defocus region so as to cover the plurality of substrate protrusions by covering the lens substrate including the plurality of substrate protrusions.

Regarding the specific operations of the immersion step, the lifting step, and the drying step, known methods may be employed. Accordingly, one feature of the method for producing the spectacle lens according to one aspect of the present invention is as follows.

"(1) An immersion direction determining step is performed prior to the immersion step to determine a direction in which the lens substrate of the spectacle lens when worn is immersed in the hard coat liquid in accordance with a direction indicated by a direction indicating portion, corresponding to a change in defocus power between the convex regions in a case in which the lens substrate includes the direction indicating portion that indicates the direction of the spectacle lens when worn, or

(2) a defocus power change direction determining step is performed prior to the immersion step to determine a direction from the lens center of the lens substrate toward a portion at which the lens substrate first comes into contact with the hard coat liquid as a direction in which defocus power is changed between the convex regions in a case in which the lens substrate does not include the direction indicating portion that indicates the direction of the spectacle lens when worn,

a lifting speed setting step is performed prior to the lifting step to set a lifting speed of the lens substrate in the lifting step, corresponding to the defocus power set in each of the convex regions, and

a lifting speed control step is performed, in accordance with a content set in the lifting speed setting step, to increase the lifting speed of the lens substrate from the start to the end of lifting during the lifting step."

Further, as described in <Characteristics of Spectacle Lens>, from the lens center toward the outer edge on at least one straight line passing through the lens center of the spectacle lens when the spectacle lens is viewed in plan facing the defocus region,

the degree to which the hard coat film fills the lens substrate tends to increase and the irregularities between the convex regions and the base region tend to become smoother (Aspect 1 described above), or

the degree to which the hard coat film fills the lens substrate tends to decrease and the irregularities between the convex regions and the base region tend to become steeper (Aspect 2 described above).

Classification is made into Case (1) in which the lens substrate includes the direction indicating portion that indicates the direction of the spectacle lens when worn and Case (2) in which the lens substrate does not include the direction indicating portion.

[Case (1)]

In a case in which the lens substrate includes the direction indicating portion that indicates the direction of the spectacle lens when worn, a direction in which the lens substrate of the spectacle lens when worn is immersed in the hard coat liquid is determined, prior to the immersion step, in accordance with the direction indicated by the direction indicating portion, corresponding to a change in defocus power between the convex regions.

In order to "correspond to the change in defocus power between the convex regions," it is preferable to obtain, prior to the immersion step, data on the defocus power of each of the convex regions that should finally be obtained. This data may be a distribution diagram of the defocus power of each of the convex regions when the spectacle lens is viewed in plan.

According to a general concept, during immersion in the hard coat liquid, the upper side of the lens substrate is directed upward and the lower side thereof is directed downward in the up-down direction, while maintaining that posture. On the other hand, according to the method for producing the spectacle lens of one aspect of the present invention, a direction in which the lens substrate of the spectacle lens when worn is immersed in the hard coat liquid is determined in accordance with the direction indicated by the direction indicating portion, corresponding to a change in defocus power between the convex regions. In the specific example described above (Addressing Cases 1 and 2), the posture of the general concept is inverted.

When the specific example described above (Addressing Cases 1 and 2) is applied in the method for producing the spectacle lens according to one aspect of the present invention, the upper side of the lens substrate is first brought into contact with the hard coat liquid, and the lower side of the lens substrate is immersed last in the hard coat liquid during immersion in the hard coat liquid. Then, the lens substrate is lifted upward while maintaining the inverted posture.

In a case in which the specific example described above (Addressing Cases 1 and 2) is applied, during the immersion step, the lens substrate is immersed in the hard coat liquid from its tip end side in one direction where the defocus power of each of the convex regions decreases toward the one direction (i.e., from the uppermost side to the lowermost side) when the spectacle lens is viewed in plan facing the defocus region.

By adopting this configuration, it is possible to produce the spectacle lens that is capable of addressing Cases 1 and 2.

Specifically, in the distance portion where the irregularities become smooth, the same visibility as that of ordinary spectacle lenses can be expected. In addition, the defocus power of the convex regions arranged on the upper side becomes higher than that of the convex regions arranged on the lower side during immersion in the hard coat liquid.

This is because the portion of the lens substrate that is first withdrawn from the hard coat liquid during the lifting step is relevant. The portion that is first withdrawn from the hard coat liquid is exposed to the atmosphere at an earlier time. Conversely, the portion that is later withdrawn from the hard coat liquid is exposed to the atmosphere at a later time.

Subsequently, when the lens substrate is being withdrawn from the hard coat liquid, the liquid pools formed between the respective substrate protrusions of the portion that is first withdrawn from the hard coat liquid are exposed to the atmosphere earlier. Therefore, the liquid pools are eliminated by their own weight, or, when the viscosity of the hard coat liquid is high, by being pulled down by the own weight of the hard coat liquid in the tank.

The portion that is first withdrawn from the hard coat liquid corresponds to the portion of the lens substrate, and consequently to the spectacle lens (i.e., the lower side of the spectacle lens) through which the line of sight passes during near vision. Therefore, because the liquid pools of the hard coat liquid have been eliminated, each convex region on the lower side of the spectacle lens favorably follows the shape of each substrate protrusion of the lens substrate. As a result, the convex regions on the lower side of the spectacle lens exhibit defocus power close to that set in each substrate protrusion of the lens substrate.

On the other hand, the portion that is later withdrawn from the hard coat liquid is exposed to the atmosphere for a shorter period of time than the portion that is first withdrawn from the hard coat liquid. This situation is further intensified according to the method for producing the spectacle lens of one aspect of the present invention. Specifically, the lifting speed of the lens substrate is increased from the start to the end of the lifting. The later the substrate is withdrawn from the hard coat liquid, the shorter its exposure time to the atmosphere becomes compared to a case in which the lifting speed is constant.

If the lifting speed is moderately low and constant, the hard coat liquid in the central clear region and the outer clear region is pulled down by its own weight, or, when the viscosity of the hard coat liquid is high, by the own weight in the tank. On the other hand, a nearly constant amount of the hard coat liquid remains in both the central clear region and the outer clear region due to the surface tension of the lens substrate. As a result, as will be described in the sections of the embodiments given later, the difference in the average film thickness of the hard coat film between the central clear region and the outer clear region is nearly eliminated.

However, according to the method for producing the spectacle lens of one aspect of the present invention, the lifting speed of the lens substrate is increased from the start to the end of the lifting. As a result, there is no sufficient time for the hard coat liquid to be pulled down by its own weight or by the own weight in the tank. In the outer portion (for example, the outer clear region) of the spectacle lens, a larger amount of the hard coat liquid remains. As a result, the film thickness of the hard coat film in the outer portion (for example, the outer clear region) of the spectacle lens becomes greater than those in the other portions. The portion where the hard coat film has a relatively greater film thickness corresponds to the central or the upper side of the lens (the portion through which the line of sight passes during distance vision), as in the specific example described above (Addressing Cases 1 and 2).

In addition, according to the method for producing the spectacle lens of one aspect of the present invention, the hard coat film is controlled, rather than using a die, by a simple idea of determining the direction in which the lens substrate of the spectacle lens when worn is immersed in the hard coat liquid in accordance with the direction of the direction indicating portion on the basis of a change in defocus power between the convex regions, thereby making it possible to address at least any of Cases 1 to 3 described above and reduce cost and time.

Prior to the lifting step, the lifting speed setting step is performed to set the lifting speed of the lens substrate during the lifting step, corresponding to the defocus power set in each of the convex regions. The content of the lifting speed setting step includes the degree and timing of the increase in the lifting speed of the lens substrate. When setting the lifting speed, it is preferable to determine the degree and timing of the increase in the lifting speed of the lens substrate in consideration of each parameter (such as the viscosity or temperature of the hard coat liquid) as described in the sections of the embodiments given later.

Then, in accordance with the content set in the lifting speed setting step, the lifting speed control step is performed to increase the lifting speed of the lens substrate from the start to the end of the lifting during the lifting step.

[Case (2)]

In a case in which the lens substrate does not include the direction indicating portion that indicates the direction of the spectacle lens when worn, a defocus power change direction determining step may be performed prior to the immersion step to determine a direction from the lens center of the lens substrate toward a portion at which the lens substrate first comes into contact with the hard coat liquid as a direction in which defocus power is changed between the convex regions.

In case (2), with respect to the lens substrate whose orientation has not been determined prior to the immersion step, the portion of the lens substrate that first comes into contact with the hard coat liquid is set as the lower side of the lens substrate when assembled into the spectacle lens, as in the specific example described above (Addressing Cases 1 and 2). In other words, with respect to the lens substrate whose orientation has not been determined prior to the immersion step, the direction in which defocus power is later changed later is set starting with the immersion step.

The "direction in which defocus power is changed" may be obtained from data on the defocus power of each of the convex regions that should finally be obtained, as in Case (1). It is preferable to obtain this data prior to the immersion step. In the case of Case 3 described above, a plurality of directions in which defocus power is changed exist, and the directions are represented by rotational angles about the lens center.

In accordance with the direction determined in the defocus power change direction determining step, the direction indicating portion setting step may also be performed in which the direction indicating portion that indicates the direction of the spectacle lens when worn is provided on the lens substrate or the spectacle lens. The specific content of the direction indicating portion setting step is not limited, as long as the direction indicating portion that makes it possible to determine the direction in which defocus power is changed is provided on the lens substrate or the spectacle lens. An example of the specific content of the direction indicating portion setting step is as follows.

- Prior to the immersion step, the peripheral edge of the lens substrate, which corresponds to a region outside the frame, is scratched.
- During the immersion step, the peripheral edge of the lens substrate, which corresponds to the region outside the frame, is masked to create a state in which the hard coat film has not been formed only on a part of the lens substrate.
- After the drying step, the peripheral edge of the lens substrate, which corresponds to the region outside the frame, is marked.

The hard coat film only needs to be formed on at least the substrate protrusions of the lens substrate. However, because the dip method is employed, it is preferable to form the hard coat film on both surfaces of the lens substrate.

In the dip method of this specification, a case is primarily illustrated in which the lowermost end of the lens substrate is first immersed in the hard coat liquid and the uppermost end thereof is finally immersed, thereby immersing the entire lens substrate in the hard coat liquid. During lifting, the lens substrate is lifted upward in the vertical direction in the reverse order. On the other hand, the lens substrate may be immersed in the hard coat liquid while being tilted slightly from the vertical direction toward the horizontal direction, and then lifted in this state. In any case, the hard coat liquid on the lens substrate flows downward along the lens substrate due to its own weight.

The hard coat liquid is not limited as long as a hard coat film can be formed by drying the hard coat liquid on the lens substrate while or after the hard coat liquid flows due to its own weight, after the lens substrate is immersed in the hard coat liquid and then lifted.

When the hard coat liquid has relatively high volatility, drying is completed during the flow of the hard coat liquid due to its own weight after the lens substrate is immersed in the hard coat liquid and then lifted. On the other hand, when the hard coat liquid has relatively low volatility, drying is not completed during the flow of the hard coat liquid due to its own weight, and the hard coat liquid is dried again after lifting to form a hard coat film.

Specific examples (preferred examples) of various conditions of the lens substrate, the substrate protrusions, the hard coat liquid, and the dip method, as well as a method for measuring the stray light rate, will be described below.

[Lens Substrate]

The aspects of the size of the substrate protrusions and the arrangement of the plurality of substrate protrusions on the surface of the lens substrate are not particularly limited and can be determined, for example, from the viewpoint of the visibility of the substrate protrusions from the outside, the impartation of design characteristics by the substrate protrusions, the adjustment of power by the substrate protrusions, and the like. The height of the substrate protrusions may be, for example, 0.1 to 10 $\mu$m, and preferably 0.7 to 0.9 $\mu$m (corresponding to 3.5 to 4.5 D). In plan view (i.e., when viewed facing the substrate protrusions from the optical axis direction), the radius of curvature of the surfaces of the substrate protrusions may be, for example, 50 to 250 mm R. Furthermore, the distance between the adjacent substrate protrusions (the distance between the end of one substrate protrusion and the end of another substrate protrusion adjacent to this substrate protrusion) may be approximately the same as, for example, the value of the radius of the substrate protrusions. Furthermore, the plurality of substrate protrusions can be arranged approximately uniformly around, for example, the lens center.

As the lens substrate, any of various lens substrates generally used in spectacle lenses can be used. The lens substrate may be, for example, a plastic lens substrate or a glass lens substrate. The glass lens substrate may be, for example, a lens substrate made of inorganic glass. The plastic lens substrate is preferable as the lens substrate because it is lightweight and less prone to breakage. Examples of the plastic lens substrate include styrene resins such as (meth) acrylic resins, polycarbonate resins, aryl resins, aryl carbonate resins such as diethylene glycol bisaryl carbonate resins (CR-39), vinyl resins, polyester resins, polyether resins, urethane resins obtained by reacting an isocyanate compound with a hydroxyl compound such as diethylene glycol, thiourethane resins obtained by reacting an isocyanate compound with a polythiol compound, and cured products obtained by curing a curable composition containing a (thio)epoxy compound having one or more disulfide bonds in the molecule (generally referred to as transparent resins). The curable composition may also be referred to as a polymerizable composition. As the lens substrate, an undyed substrate (colorless lens) or a dyed substrate (dyed lens) may be used. The thickness and diameter of the lens substrate are not particularly limited. However, for example, the thickness (central thickness) may be approximately 1 to 30 mm, and the diameter may be approximately 50 to 100 mm. The refractive index of the lens substrate may be, for example, approximately 1.60 to 1.75. However, the refractive index of the lens substrate is not limited to this range, and may be within or outside this range. In the present invention and this specification, the refractive index refers to the refractive index with respect to light having a wavelength of 500 nm. The lens substrate can be molded by a known molding method such as cast polymerization. For example, the lens substrate having the substrate protrusions on at least one surface can be obtained by molding the lens substrate through cast polymerization using a die having a molding surface provided with a plurality of concave portions.

[Hard Coat Film]

One aspect of the hard coat film formed on the surface of the lens substrate having the substrate protrusions is a hard coat film formed by curing a curable composition (the hard coat liquid described before) containing a curable compound. Such a hard coat film contributes to an improvement in the durability of the spectacle lens. The curable compound refers to a compound having a curable functional group, and the curable composition refers to a composition containing one or more types of curable compounds.

One aspect of the curable composition (hard coat liquid) for forming the hard coat film can be a curable composition containing an organic silicon compound as the curable compound, and can also be a curable composition containing metal oxide particles together with the organic silicon compound. An example of the curable composition capable of forming the hard coat film is the curable composition described in Japanese Patent Application Publication No. S63-10640.

Furthermore, one aspect of the organic silicon compound can be an organosilicon compound represented by the following general Formula (I) or a hydrolyzate thereof.

$$(R^1)_a(R^3)_b Si(OR^2)_{4-(a+b)} \cdots \qquad (I)$$

In general Formula (I), $R^1$ represents an organic group having a glycidoxy group, an epoxy group, a vinyl group, a methacryloxy group, an acryloxy group, a mercapto group, an amino group, a phenyl group, or the like, $R^2$ represents an alkyl group having 1 to 4 carbon atoms, an acyl group having 1 to 4 carbon atoms, or an aryl group having 6 to 10 carbon atoms, $R^3$ represents an alkyl group having 1 to 6 carbon atoms or an aryl group having 6 to 10 carbon atoms, and a and b each represent 0 or 1.

The alkyl group having 1 to 4 carbon atoms represented by $R^2$ is a linear or branched alkyl group, and specific examples thereof include a methyl group, an ethyl group, a propyl group, and a butyl group, and the like.

Examples of the acyl group having 1 to 4 carbon atoms represented by $R^2$ include an acetyl group, a propionyl group, an oleyl group, a benzoyl group, and the like.

Examples of the aryl group having 6 to 10 carbon atoms represented by $R^2$ include a phenyl group, a xylyl group, a tolyl group, and the like.

The alkyl group having 1 to 6 carbon atoms represented by $R^3$ is a linear or branched alkyl group, and specific examples thereof include a methyl group, an ethyl group, a propyl group, a butyl group, a pentyl group, a hexyl group, and the like.

Examples of the aryl group having 6 to 10 carbon atoms represented by $R^3$ include a phenyl group, a xylyl group, a tolyl group, and the like.

Specific examples of the compounds represented by general Formula (I) include the compounds described in paragraph [0073] of Japanese Patent Application Publication No. 2007-077327. Because the organic silicon compound represented by general Formula (I) has a curable group, the hard coat film can be formed by subjecting it to curing treatment after application.

Metal oxide particles can contribute to the adjustment of the refractive index and an improvement in the hardness of the hard coat film. Specific examples of the metal oxide particles include particles of tungsten oxide ($WO_3$), zinc oxide ($ZnO$), silicon oxide ($SiO_2$), aluminum oxide ($Al_2O_3$), titanium oxide ($TiO_2$), zirconium oxide ($ZrO_2$), tin oxide ($SnO_2$), beryllium oxide ($BeO$), antimony oxide ($Sb_2O_3$), and the like, and the metal oxide particles can be used alone or in combination of two or more. From the viewpoint of achieving both scratch resistance and optical properties of the hard coat film, the particle size of the metal oxide particles is preferably in the range of 5 to 30 nm. The content of the metal oxide particles in the curable composition can be appropriately set in consideration of the refractive index and hardness of the hard coat film to be formed, and may be generally approximately 5 to 80% by mass based on the solid content of the curable composition. Furthermore, the metal oxide particles are preferably colloidal particles from the viewpoint of dispersibility in the hard coat film.

[Dip Method]

The hard coat film can be formed by the following method. For example, a curable composition prepared by mixing components and, if necessary, optional components such as an organic solvent, a surfactant (leveling agent), or a curing agent is applied by immersion onto the surface of the lens substrate having the substrate protrusions, or applied by immersion via other films to form a coating film. This coating film is then subjected to curing treatment (for example, heating and/or light irradiation) according to the type of the curable compound. For example, when the curing treatment is performed by evaporation, the curing reaction of the curable compound in the coating film may be accelerated by placing the lens substrate, on which the coating film of the curable composition has been formed, under an atmospheric temperature of 50°C to 150°C for approximately 30 minutes to 3 hours in a tilted position, provided that the curable composition has fluidity. Note that drying treatment may also be performed together with this curing reaction.

The viscosity of the curable composition for forming the hard coat film on the surface of the lens substrate having the substrate protrusions can be appropriately set, but it is preferably in the range of 1 to 50 mPa·s, more preferably in the range of 1 to 40 mPa·s, and still more preferably in the range of 1 to 20 mPa·s. In the present invention and this specification, the viscosity refers to the viscosity at a liquid temperature of 25°C.

The temperature of the curable composition is preferably 0°C to 30°C when the lens substrate is immersed.

The boiling point of the solvent constituting the curable composition is preferably 30°C to 200°C and more preferably 60°C to 120°C when the lens substrate is immersed. The type of the solvent is not limited. For example, methanol, toluene, or the like may be used.

The concentration of the curable composition is preferably 1 to 50 wt% when the lens substrate is immersed.

The immersion time is preferably 1 to 300 seconds when the lens substrate is immersed.

The lifting speed of the curable composition is preferably 10 to 400 mm/min when the lens substrate is immersed. Note that the lifting speed may be constant (for example, with a variation width of ± 10%), or may be varied. For example, the lifting speed during the lifting step may be changed such that the difference in the average film thickness of the hard coat film between the central clear region and the outer clear region is within 10%.

Furthermore, one aspect of the coating film formed on the surface of the lens substrate having the substrate protrusions can be a coating film, which is generally referred to as a primer film and contributes to an improvement in adhesion between layers. As a hard coat liquid that is capable of forming such a coating film, a composition (hereinafter referred to as a "drying-solidifiable composition") in which a resin component such as a polyurethane resin is dispersed in a solvent (water, an organic solvent, or a mixed solvent thereof) may be used. Such a composition proceeds to solidify when the solvent is dried and removed. Drying can be performed by drying treatment such as air drying or heat drying. Note that a curing reaction may also be performed together with this drying treatment.

The drying method after lifting is preferably heat drying. Furthermore, the drying temperature after lifting is preferably 20°C to 130°C. Furthermore, the drying time after lifting is preferably 0 to 90 minutes. A drying time of 0 minutes means the drying of the hard coat liquid during flow, and means that the hard coat liquid solidifies due to the volatilization of the solvent without intentionally performing a drying step, thereby forming the hard coat film.

<Modified Examples, Etc.>

One aspect of the present invention has been described above. However, the disclosure described above merely illustrates the one exemplary aspect of the present invention. In other words, the technical scope of the present invention is not limited to the one exemplary aspect described above and may be modified in various ways without departing from the gist of the present invention. Furthermore, the disclosure described above may be arbitrarily selected and combined with the following modified examples.

The method for producing the spectacle lens according to one aspect of the present invention also reflects the technical idea of the present invention as a method for controlling the film thickness of the hard coat film on the spectacle lens.

Fig. 8 is a schematic block diagram showing the configuration of a control system for the film thickness of the hard coat film on the spectacle lens according to one aspect of the present invention.

The present invention can also apply the technical idea to a control system for the film thickness of the hard coat film on the spectacle lens. An example of the configuration is as follows.

"The control system 100 for the film thickness of the hard coat film on the spectacle lens that achieves a myopia progression suppressing effect,

the spectacle lens including
the functional region having
the base region that causes a light flux incident from the object-side surface to be emitted from the eye-side surface, enter the wearer's pupil, and be focused on the retina to achieve wearer's prescription power, and
the defocus region composed of the plurality of convex regions that cause a light flux incident from the object-side surface to be emitted from the eye-side surface, while providing positive defocus power to focus a light flux incident on the wearer's pupil at a position in front of a light flux that has passed through the base region,
the spectacle lens being obtained through
the immersion step of immersing the lens substrate in the hard coat liquid, the lens substrate having the substrate base portion and the plurality of substrate protrusions protruding from the substrate base portion on the surface thereof,
the lifting step of lifting the lens substrate from the hard coat liquid, and
the drying step of obtaining the hard coat film that forms the base region so as to cover the substrate base portion and forms the defocus region so as to cover the plurality of substrate protrusions by covering the lens substrate including the plurality of substrate protrusions,
the control system including:

(1) the immersion direction determining portion 200 that, prior to the immersion step, determines a direction in which the lens substrate of the spectacle lens when worn is immersed in the hard coat liquid in accordance with a direction indicated by the direction indicating portion, corresponding to a change in defocus power between the convex regions, in a case in which the lens substrate includes the direction indicating portion that indicates the direction of the spectacle lens when worn, or
(2) the defocus power change direction determining portion 300 that, prior to the immersion step, determines a direction from the lens center of the lens substrate toward a portion at which the lens substrate first comes into contact with the hard coat liquid as a direction in which defocus power is changed between the convex regions, in a case in which the lens substrate does not include the direction indicating portion that indicates the direction of the spectacle lens when worn;

the lifting speed setting portion 400 that, prior to the lifting step, sets the lifting speed of the lens substrate in the lifting step, corresponding to the defocus power set in each of the convex regions; and
the lifting speed control portion 500 that, in accordance with a content set in the lifting speed setting step, increases the lifting speed of the lens substrate from the start to the end of lifting during the lifting step,
wherein,
from the lens center toward the outer edge on at least one straight line passing through the lens center of the spectacle lens when the spectacle lens is viewed in plan facing the defocus region,
the degree to which the hard coat film fills the lens substrate tends to increase and the irregularities between the convex regions and the base region tend to become smoother, or
the degree to which the hard coat film fills the lens substrate tends to decrease and the irregularities between the convex regions and the base region tend to become steeper."

Because the content performed by the immersion direction determining portion is the same as that performed in the immersion direction determining step described above, its description is omitted. Because the content performed by the defocus power change direction determining portion is the same as that performed in the defocus power change direction determining step described above, its description is omitted. Because the content performed by the lifting speed setting portion is the same as that performed in the lifting speed setting step described above, its description is omitted. Because the content performed by the lifting speed control portion is the same as that performed in the lifting speed control step, its description is omitted.

The roles of the immersion direction determining portion, the defocus power change direction determining portion, the lifting speed setting portion, and the lifting speed control portion may be performed by a computation portion inside a computer, or by a control computer portion including the computation portion.

The control computer portion functions as a computer device that performs information processing according to a specified program and is specifically composed of a combination of a CPU (Central Processing Unit), an HDD (Hard disk drive), a ROM (Read Only Memory), a RAM (Random Access Memory), an external interface (I/F), and the like.

The present invention can also apply the technical idea to a program for the control system for the film thickness of the hard coat film on the spectacle lens. An example of the configuration is as follows.

"The program for the control system for the film thickness of the hard coat film on the spectacle lens that achieves a myopia progression suppressing effect,

the spectacle lens including
the functional region having
the base region that causes a light flux incident from the object-side surface to be emitted from the eye-side surface, enter the wearer's pupil, and be focused on the retina to achieve wearer's prescription power, and
the defocus region composed of the plurality of convex regions that cause a light flux incident from the object-side surface to be emitted from the eye-side surface, while providing positive defocus power to focus a light flux incident on the wearer's pupil at a position in front of a light flux that has passed through the base region,
the spectacle lens being obtained through
the immersion step of immersing the lens substrate in the hard coat liquid, the lens substrate having the substrate base portion and the plurality of substrate protrusions protruding from the substrate base portion on the surface thereof,
the lifting step of lifting the lens substrate from the hard coat liquid, and
the drying step of obtaining the hard coat film that forms the base region so as to cover the substrate base portion and forms the defocus region so as to cover the plurality of substrate protrusions by covering the lens substrate including the plurality of substrate protrusions,
the program causing a computer to function as:

(1) the immersion direction determining portion that, prior to the immersion step, determines a direction in which the lens substrate of the spectacle lens when worn is immersed in the hard coat liquid in accordance with a direction indicated by the direction indicating portion, corresponding to a change in defocus power between the convex regions, in a case in which the lens substrate includes the direction indicating portion that indicates the direction of the spectacle lens when worn; or
(2) the defocus power change direction determining portion that, prior to the immersion step, determines a direction from the lens center of the lens substrate toward a portion at which the lens substrate first comes into contact with the hard coat liquid as a direction in which defocus power is changed between the convex regions, in a case in which the lens substrate does not include the direction indicating portion that indicates the direction of the spectacle lens when worn;

the lifting speed setting portion that, prior to the lifting step, sets the lifting speed of the lens substrate in the lifting step, corresponding to the defocus power set in each of the convex regions; and
the lifting speed control portion that, in accordance with a content set in the lifting speed setting step, increases the lifting speed of the lens substrate from the start to the end of lifting during the lifting step,
wherein,
from the lens center toward the outer edge on at least one straight line passing through the lens center of the spectacle lens when the spectacle lens is viewed in plan facing the defocus region,
the degree to which the hard coat film fills the lens substrate tends to increase and the irregularities between the convex regions and the base region tend to become smoother, or
the degree to which the hard coat film fills the lens substrate tends to decrease and the irregularities between the convex regions and the base region tend to become steeper."

[Embodiments]

Hereinafter, the present invention will be specifically described using embodiments, but the following embodiments are not intended to limit the present invention.

<First Embodiment>

The following lens substrate was prepared. Note that no other material was laminated on the lens substrate. The prescription power S (spherical power) was set to 0.00 D, and the C (cylindrical power) was set to 0.00 D. This lens substrate is an uncut lens and has a regular circular shape in plan view, and the lens center is the center of the regular circle. This center is also be referred to as the eye point EP in the sections of the embodiments.

Diameter of lens substrate in plan view: 100 mm
Type of lens substrate: PC (polycarbonate)
Refractive index of lens substrate: 1.589
Base curve of lens substrate: 3.00 D
Forming surface of substrate protrusions: object-side surface
Defocus power of substrate protrusions in design: 3.50 D
Shape of substrate protrusions in plan view: regular circle (having a diameter of 1 mm)
Height of substrate protrusions from substrate base portion: 0.8 $\mu$m
Arrangement of substrate protrusions in plan view: each substrate protrusion is discretely and independently arranged such that its center is positioned at a vertex of an equilateral triangle (the center of each substrate protrusion is arranged at a vertex of a honeycomb structure).
Pitch between substrate protrusions (distance between centers of substrate protrusions): 1.5 mm

In this embodiment, the range of the central clear region 2 was set to a region within a circle having a radius of 3.50 mm from the eye point EP, and the range of the functional region 3 was set to be within a circle having a radius of 12.50 mm from the lens center (excluding the central clear region 2). Note that the outer clear region 4 was provided on the side closer to the outer edge of the spectacle lens 1 than the functional region 3. The entire region between the outer edge of the spectacle lens 1 and the functional region 3 was set as the outer clear region 4 (the same applies to each example below).

The hard coat film was formed on both surfaces (the entire upper and lower surfaces) of the lens substrate by the dip method. The immersion direction and the lifting direction were set to be vertical. However, in this embodiment, as described in one aspect of the present invention, the lens substrate was inverted (the lower side of the spectacle lens, that is, the lower side of the lens substrate was directed upward in the up-down direction) when the lens substrate was arranged in a lens holder immersed together with the lens substrate during the immersion step.

Fig. 9 is a schematic plan view of the lens substrate in which the uppermost position of the functional region is defined as position A and the lowermost position thereof is defined as position G, the lens substrate being immersed in the hard coat liquid from position A.

The conditions of the hard coat liquid and the dip method are as follows.

Type of hard coat liquid: heat-curable coating agent
Temperature of hard coat liquid: 10°C
Viscosity of hard coat liquid: 10 mPa·s
Boiling point of solvent (methanol) of hard coat liquid: 64.7°C
Immersion time: 3 minutes
Drying method after lifting: heating
Drying temperature after lifting: 110°C
Drying time after lifting: 90 minutes

Note that the lifting speed was as shown in Fig. 10.

Fig. 10 is a graph showing the relationship between the position of the lens substrate in the Y direction (horizontal axis) and the lifting speed at each corresponding position (vertical axis: mm/sec) according to the first embodiment.

As shown in Fig. 10, two cycles of the process from the immersion step to the drying step were performed in the first embodiment. In the first immersion step, the lifting speed was kept constant. In the second immersion step, only the positions A to C of the lens substrate were immersed, while the lifting speed was kept constant. On the other hand, the lifting speed in the second immersion step was higher than that in the first immersion step.

Position G indicates the convex region of the spectacle lens that corresponds to the substrate protrusion of the lens substrate located at the uppermost portion in the up-down direction during the immersion step. Position A indicates the convex region of the spectacle lens that corresponds to the substrate protrusion of the lens substrate located at the lowermost portion in the up-down direction during the immersion step.

Because the lens substrate is inverted in each embodiment, position G indicates the portion through which the line of sight passes during near vision, that is, the lower side of the spectacle lens, position A indicates the upper side of the spectacle lens, and position D indicates the lens center (and the center of the central clear region). The distances between adjacent positions (for example, the distance between positions A and B, the distance between positions B and C, and the like) are kept even.

On the basis of the above, the spectacle lens was obtained through the drying step. In this spectacle lens, the defocus power of the convex regions at specified positions was obtained. This defocus power was obtained using a known device employing a ray tracking method. The results are shown in the left vertical axis (unit: D (diopter)) of the graph in Fig. 4.

In Fig. 11, the right vertical axis (unit: D) indicates the defocus power of the convex regions at specified positions of the spectacle lens according to the first embodiment, the left vertical axis (unit: μm) indicates the film thicknesses of the hard coat film in the outer clear region and the central clear region of the spectacle lens according to the first embodiment, and the horizontal axis indicates the positions on the vertical line passing through the lens center of the spectacle lens according to the first embodiment.

In the first embodiment, both Aspects 1 and 2 were satisfied on at least one straight line extending from the lens center toward the outer edge and passing through the lens center of the spectacle lens.

(Aspect 1) (From position D to position A), the degree to which the hard coat film fills the lens substrate tends to increase and the irregularities between the convex regions and the base region tend to become smoother, or
(Aspect 2) (From position D to position G), the degree to which the hard coat film fills the lens substrate tends to decrease and the irregularities between the convex regions and the base region tend to become steeper.

Furthermore, the defocus power tended to increase from the upper side to the lower side (from positions A to G) of the spectacle lens when worn.

As a result, the first embodiment can address Cases 1 and 2 described above.

<Second Embodiment>

The lifting speed was as shown in Fig. 12.

Fig. 12 is a graph showing the relationship between the position of the lens substrate in the Y direction (horizontal axis) and the lifting speed at each corresponding position (vertical axis: mm/sec) according to a second embodiment.

As shown in Fig. 12, the immersion step was performed only once in the second embodiment. The lifting speed was kept constant from position G to position D. Then, after lifting to position D, the lifting speed was increased discontinuously. While maintaining the increased speed, the lifting was performed at a constant speed from position D to position A.

The remaining conditions were the same as in the first embodiment.

In Fig. 13, the right vertical axis (unit: D) indicates the defocus power of the convex regions at specified positions of the spectacle lens according to the second embodiment, the left vertical axis (unit: μm) indicates the film thicknesses of the hard coat film in the outer clear region and the central clear region of the spectacle lens according to the second embodiment, and the horizontal axis indicates the positions on the vertical line passing through the lens center of the spectacle lens according to the second embodiment.

In the second embodiment, Aspect 1 was satisfied on at least one straight line extending from the lens center toward the outer edge and passing through the lens center of the spectacle lens.

(Aspect 1) (From position D to position A), the degree to which the hard coat film fills the lens substrate tends to increase and the irregularities between the convex regions and the base region tend to become smoother, or

Furthermore, the defocus power tended to increase from the upper side to the lower side (from positions A to G) of the spectacle lens when worn.

As a result, the second embodiment can address Cases 1 and 2 described above.

<Third Embodiment>

The lifting speed was as shown in Fig. 14.

Fig. 14 is a graph showing the relationship between the position of the lens substrate in the Y direction (horizontal axis) and the lifting speed at each corresponding position (vertical axis: mm/sec) according to a third embodiment.

As shown in Fig. 14, the immersion step was performed only once in the third embodiment. The lifting speed was kept constant from position G to position D. Then, after lifting to position D, the lifting speed was increased discontinuously from position D to position C. While maintaining the increased speed, the lifting was performed at a constant speed from position C to position A.

The remaining conditions were the same as in the first embodiment.

In Fig. 15, the right vertical axis (unit: D) indicates the defocus power of the convex regions at specified positions of the spectacle lens according to the third embodiment, the left vertical axis (unit: μm) indicates the film thicknesses of the hard coat film in the outer clear region and the central clear region of the spectacle lens according to the third embodiment, and the horizontal axis indicates the positions on the vertical line passing through the lens center of the spectacle lens according to the third embodiment.

In the third embodiment, both Aspects 1 and 2 were satisfied on at least one straight line extending from the lens center toward the outer edge and passing through the lens center of the spectacle lens.

(Aspect 1) (From position D to position A), the degree to which the hard coat film fills the lens substrate tends to increase and the irregularities between the convex regions and the base region tend to become smoother, or

(Aspect 2) (From position D to position G), the degree to which the hard coat film fills the lens substrate tends to decrease and the irregularities between the convex regions and the base region tend to become steeper.

Furthermore, the defocus power tended to increase from the upper side to the lower side (from positions A to G) of the spectacle lens when worn.

As a result, the third embodiment can address Cases 1 and 2 described above.

<Comparative Example 1>

The lifting speed was as shown in Fig. 16.

Fig. 16 is a graph showing the relationship between the position of the lens substrate in the Y direction (horizontal axis) and the lifting speed at each corresponding position (vertical axis: mm/sec) according to Comparative Example 1.

As shown in Fig. 16, the lifting was kept constant in Comparative Example 1.

Furthermore, unlike in each embodiment, the vertical direction and the immersion direction of the lens substrate were made to coincide with each other. In other words, in Comparative Example 1, the lens substrate was immersed in the hard coat liquid sequentially from position G to position A from below.

The remaining conditions were the same as in the first embodiment.

In Fig. 17, the right vertical axis (unit: D) indicates the defocus power of the convex regions at specified positions of the spectacle lens according to Comparative Example 1, the left vertical axis (unit: μm) indicates the film thicknesses of the hard coat film in the outer clear region and the central clear region of the spectacle lens according to Comparative Example 1, and the horizontal axis indicates the positions on the vertical line passing through the lens center of the spectacle lens according to Comparative Example 1.

In Comparative Example 1, both Aspects 1 and 2 were not satisfied on at least one straight line extending from the lens center toward the outer edge and passing through the lens center of the spectacle lens.

Furthermore, the defocus power tended to decrease from the upper side (position A: distance portion) to the lower side (position G: near portion) of the spectacle lens when worn.

As a result, Comparative Example 1 cannot address Cases 1 and 2 described above.

[Reference Signs List]

1 Spectacle lens
2 Central clear region
3 Functional region
3a Convex region
3b Base region
4 Outer clear region
30a Substrate protrusion
30b Substrate base portion
EP Eye point
100 Control system for film thickness of hard coat film on spectacle lens
200 Immersion direction determining portion
300 Defocus power change direction determining portion
400 Lifting speed setting portion
500 Lifting speed control portion

**Claims**

1. A spectacle lens that achieves a myopia progression suppressing effect and includes a functional region having

   a base region that causes a light flux incident from an object-side surface to be emitted from an eye-side surface, enter a wearer's pupil, and be focused on a retina to achieve wearer's prescription power, and a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region, the spectacle lens comprising:

   a lens substrate having a substrate base portion and a plurality of substrate protrusions protruding from the substrate base portion on a surface thereof; and a hard coat film that forms the base region so as to cover the substrate base portion and forms the defocus region so as to cover the plurality of substrate protrusions by covering the lens substrate including the plurality of substrate protrusions, wherein, from a lens center toward an outer edge on at least one straight line passing through the lens center of the spectacle lens when the spectacle lens is viewed in plan facing the defocus region, a degree to which the hard coat film fills the lens substrate tends to increase and irregularities between the convex regions and the base region tend to become smoother, or the degree to which the hard coat film fills the lens substrate tends to decrease and the irregularities between the convex regions and the base region tend to become steeper.

2. The spectacle lens according to claim 1, wherein, on the one straight line,

   the degree to which the hard coat film fills the lens substrate tends to increase and the irregularities between the convex regions and the base region tend to become smoother from the lens center toward one outer edge, and the degree to which the hard coat film fills the lens substrate tends to decrease and the irregularities between the convex regions and the base region tend to become steeper from the lens center toward another outer edge.

3. The spectacle lens according to claim 1, comprising:

   a direction indicating portion that indicates a direction of the spectacle lens when worn, wherein the degree to which the hard coat film fills the lens substrate tends to increase and the irregularities between the convex regions and the base region tend to become smoother from the lens center toward an upper outer edge, and the degree to which the hard coat film fills the lens substrate tends to decrease and the irregularities between the convex regions and the base region tend to become steeper from the lens center toward a lower outer edge.

4. The spectacle lens according to claim 1, wherein a value of defocus power [unit: D] of 80% or more of the convex regions in the spectacle lens is 0.102 $\mu$m $\times$ 8/(a diameter of the convex regions [unit: mm])^2 or more.

5. The spectacle lens according to claim 1, wherein the spectacle lens is an uncut lens before lens shaping.

6. The spectacle lens according to claim 1, wherein defocus power of 80% or more of the convex regions in the spectacle lens is in a range of 3.0 to 5.0 D.

7. The spectacle lens according to claim 1, wherein defocus power of 80% or more of the substrate protrusions in the lens substrate falls within a range of $\pm$ 0.12 D.

8. The spectacle lens according to claim 7, wherein defocus power of the convex regions approaches the defocus power of the substrate protrusions underlying the convex regions from an upper side to a lower side of the spectacle lens when worn.

9. The spectacle lens according to claim 1, further comprising:

a central clear region that is surrounded by the functional region and includes an eye point, wherein
the central clear region causes a light flux incident from the object-side surface to be emitted from the eye-side surface, enter the wearer's pupil, and be focused on the retina to achieve the wearer's prescription power.

10. The spectacle lens according to claim 1, further comprising:

an outer clear region that serves as an annular region surrounding the functional region on an outer edge side of the spectacle lens, wherein
the outer clear region causes a light flux incident from the object-side surface to be emitted from the eye-side surface, enter the wearer's pupil, and be focused on the retina to achieve the wearer's prescription power.

11. Spectacles in which the spectacle lens according to any one of claim 1 to 10 is mounted in a frame.

12. The spectacles according to claim 11, wherein, when the spectacle lens is viewed in plan facing the defocus region, the degree to which the hard coat film fills the lens substrate tends to increase and the irregularities between the convex regions and the base region tend to become smoother toward the upper side.

13. A method for producing a spectacle lens that achieves a myopia progression suppressing effect and includes a functional region having

a base region that causes a light flux incident from an object-side surface to be emitted from an eye-side surface, enter a wearer's pupil, and be focused on a retina to achieve wearer's prescription power, and
a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region, the method comprising:

an immersion step of immersing a lens substrate in a hard coat liquid, the lens substrate having a substrate base portion and a plurality of substrate protrusions protruding from the substrate base portion on a surface thereof;
a lifting step of lifting the lens substrate from the hard coat liquid; and
a drying step of obtaining a hard coat film that forms the base region so as to cover the substrate base portion and forms the defocus region so as to cover the plurality of substrate protrusions by covering the lens substrate including the plurality of substrate protrusions, wherein

(1) an immersion direction determining step is performed prior to the immersion step to determine a direction in which the lens substrate of the spectacle lens when worn is immersed in the hard coat liquid in accordance with a direction indicated by a direction indicating portion, corresponding to a change in defocus power between the convex regions in a case in which the lens substrate includes the direction indicating portion that indicates the direction of the spectacle lens when worn, or
(2) a defocus power change direction determining step is performed prior to the immersion step to determine a direction from the lens center of the lens substrate toward a portion at which the lens substrate first comes into contact with the hard coat liquid as a direction in which defocus power is changed between the convex regions in a case in which the lens substrate does not include a direction indicating portion that indicates the direction of the spectacle lens when worn,

a lifting speed setting step is performed prior to the lifting step to set a lifting speed of the lens substrate in the lifting step, corresponding to the defocus power set in each of the convex regions, and
a lifting speed control step is performed, in accordance with a content set in the lifting speed setting step, to increase the lifting speed of the lens substrate from a start to an end of lifting during the lifting step, and wherein,
from the lens center toward an outer edge on at least one straight line passing through the lens center of the spectacle lens when the spectacle lens is viewed in plan facing the defocus region,
a degree to which the hard coat film fills the lens substrate tends to increase and irregularities between the convex regions and the base region tend to become smoother, or
the degree to which the hard coat film fills the lens substrate tends to decrease and the irregularities between the convex regions and the base region tend to become steeper.

14. The method for producing the spectacle lens according to claim 13, wherein,
during the immersion step, the lens substrate is immersed in the hard coat liquid from a tip end side thereof in one direction where the defocus power of each of the convex regions tends to decrease toward the one direction when the spectacle lens is viewed in plan facing the defocus region.

15. A method for controlling a film thickness of a hard coat film on a spectacle lens that achieves a myopia progression suppressing effect and includes a functional region having

a base region that causes a light flux incident from an object-side surface to be emitted from an eye-side surface, enter a wearer's pupil, and be focused on a retina to achieve wearer's prescription power, and
a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region, the method comprising:

an immersion step of immersing a lens substrate in a hard coat liquid, the lens substrate having a substrate base portion and a plurality of substrate protrusions protruding from the substrate base portion on a surface thereof;
a lifting step of lifting the lens substrate from the hard coat liquid; and
a drying step of obtaining a hard coat film that forms the base region so as to cover the substrate base portion and forms the defocus region so as to cover the plurality of substrate protrusions by covering the lens substrate including the plurality of substrate protrusions,
wherein

(1) an immersion direction determining step is performed prior to the immersion step to determine a direction in which the lens substrate of the spectacle lens when worn is immersed in the hard coat liquid in accordance with a direction indicated by a direction indicating portion, corresponding to a change in defocus power between the convex regions in a case in which the lens substrate includes the direction indicating portion that indicates the direction of the spectacle lens when worn, or
(2) a defocus power change direction determining step is performed prior to the immersion step to determine a direction from the lens center of the lens substrate toward a portion at which the lens substrate first comes into contact with the hard coat liquid as a direction in which defocus power is changed between the convex regions in a case in which the lens substrate does not include a direction indicating portion that indicates the direction of the spectacle lens when worn,

a lifting speed setting step is performed prior to the lifting step to set a lifting speed of the lens substrate in the lifting step, corresponding to the defocus power set in each of the convex regions, and
a lifting speed control step is performed, in accordance with a content set in the lifting speed setting step, to increase the lifting speed of the lens substrate from a start to an end of lifting during the lifting step, and wherein,
from the lens center toward an outer edge on at least one straight line passing through the lens center of the spectacle lens when the spectacle lens is viewed in plan facing the defocus region,
a degree to which the hard coat film fills the lens substrate tends to increase and irregularities between the convex regions and the base region tend to become smoother, or
the degree to which the hard coat film fills the lens substrate tends to decrease and the irregularities between the convex regions and the base region tend to become steeper.

16. A control system for a film thickness of a hard coat film on a spectacle lens that achieves a myopia progression suppressing effect,

the spectacle lens including
a functional region having
a base region that causes a light flux incident from an object-side surface to be emitted from an eye-side surface, enter a wearer's pupil, and be focused on a retina to achieve wearer's prescription power, and
a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region,
the spectacle lens being obtained through

an immersion step of immersing a lens substrate in a hard coat liquid, the lens substrate having a substrate base portion and a plurality of substrate protrusions protruding from the substrate base portion on a surface thereof, a lifting step of lifting the lens substrate from the hard coat liquid, and

a drying step of obtaining a hard coat film that forms the base region so as to cover the substrate base portion and forms the defocus region so as to cover the plurality of substrate protrusions by covering the lens substrate including the plurality of substrate protrusions,

the control system comprising:

(1) an immersion direction determining portion that, prior to the immersion step, determines a direction in which the lens substrate of the spectacle lens when worn is immersed in the hard coat liquid in accordance with a direction indicated by a direction indicating portion, corresponding to a change in defocus power between the convex regions, in a case in which the lens substrate includes the direction indicating portion that indicates the direction of the spectacle lens when worn, or

(2) a defocus power change direction determining portion that, prior to the immersion step, determines a direction from a lens center of the lens substrate toward a portion at which the lens substrate first comes into contact with the hard coat liquid as a direction in which defocus power is changed between the convex regions, in a case in which the lens substrate does not include a direction indicating portion that indicates a direction of the spectacle lens when worn;

a lifting speed setting portion that, prior to the lifting step, sets a lifting speed of the lens substrate in the lifting step, corresponding to the defocus power set in each of the convex regions; and

a lifting speed control portion that, in accordance with a content set by the lifting speed setting portion, increases the lifting speed of the lens substrate from a start to an end of lifting during the lifting step,

wherein,

from the lens center toward an outer edge on at least one straight line passing through the lens center of the spectacle lens when the spectacle lens is viewed in plan facing the defocus region,

a degree to which the hard coat film fills the lens substrate tends to increase and irregularities between the convex regions and the base region tend to become smoother, or

the degree to which the hard coat film fills the lens substrate tends to decrease and the irregularities between the convex regions and the base region tend to become steeper.

17. A program for a control system for a film thickness of a hard coat film on a spectacle lens that achieves a myopia progression suppressing effect,

the spectacle lens including

a functional region having

a base region that causes a light flux incident from an object-side surface to be emitted from an eye-side surface, enter a wearer's pupil, and be focused on a retina to achieve wearer's prescription power, and

a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region,

the spectacle lens being obtained through

an immersion step of immersing a lens substrate in a hard coat liquid, the lens substrate having a substrate base portion and a plurality of substrate protrusions protruding from the substrate base portion on a surface thereof, a lifting step of lifting the lens substrate from the hard coat liquid, and

a drying step of obtaining a hard coat film that forms the base region so as to cover the substrate base portion and forms the defocus region so as to cover the plurality of substrate protrusions by covering the lens substrate including the plurality of substrate protrusions,

the program causing a computer to function as:

(1) an immersion direction determining portion that, prior to the immersion step, determines a direction in which the lens substrate of the spectacle lens when worn is immersed in the hard coat liquid in accordance with a direction indicated by a direction indicating portion, corresponding to a change in defocus power between the convex regions, in a case in which the lens substrate includes the direction indicating portion that indicates the direction of the spectacle lens when worn; or

(2) a defocus power change direction determining portion that, prior to the immersion step, determines a direction from a lens center of the lens substrate toward a portion at which the lens substrate first comes into contact with the hard coat liquid as a direction in which defocus power is changed between the convex regions, in a case in which the lens substrate does not include a direction indicating portion that indicates a direction of the spectacle lens when worn;

a lifting speed setting portion that, prior to the lifting step, sets a lifting speed of the lens substrate in the lifting step, corresponding to the defocus power set in each of the convex regions; and
a lifting speed control portion that, in accordance with a content set by the lifting speed setting portion, increases the lifting speed of the lens substrate from a start to an end of lifting during the lifting step,
wherein,
from the lens center toward an outer edge on at least one straight line passing through the lens center of the spectacle lens when the spectacle lens is viewed in plan facing the defocus region,
a degree to which the hard coat film fills the lens substrate tends to increase and irregularities between the convex regions and the base region tend to become smoother, or
the degree to which the hard coat film fills the lens substrate tends to decrease and the irregularities between the convex regions and the base region tend to become steeper.

[Fig. 1A]

[Fig. 1B]

[Fig. 2]

[Fig. 3]

[Fig. 4]

[Fig. 5]

[Fig. 6]

[Fig. 7]

```
                          ┌─────────────┐
                          │    start    │
                          └──────┬──────┘
                                 │
                                 ▼
                        ┌──────────────────┐
                        │  LIFTING SPEED   │
                        │  SETTING STEP    │
                        └────────┬─────────┘
                                 │
                                 ▼
                          ╱──────────────╲
              No        ╱   DIRECTION      ╲
          ◄────────────  INDICATING PORTION │
                        ╲  PROVIDED ON LENS ╱
                         ╲   SUBSTRATE     ╱
                          ╲      ?        ╱
                           ╲─────┬───────╱
                                 │ Yes
         ┌──────────────────┐    ▼
         │ DEFOCUS POWER    │  ┌──────────────────┐
         │ CHANGE DIRECTION │  │  IMMERSION       │
         │ DETERMINING STEP │  │  DIRECTION       │
         └────────┬─────────┘  │ DETERMINING STEP │
                  │            └────────┬─────────┘
                  │                     │
                  │                     ▼
                  │            ┌──────────────────┐
                  └───────────►│  IMMERSION STEP  │
                               └────────┬─────────┘
                                        │
                                        ▼
                               ┌──────────────────┐
                               │  LIFTING STEP    │
                               │ (LIFTING SPEED   │
                               │ CONTROL STEP)    │
                               └────────┬─────────┘
                                        │
                                        ▼
                               ┌──────────────────┐
                               │  DRYING STEP     │
                               └────────┬─────────┘
                                        │
                                        ▼
                                  ┌─────────────┐
                                  │     end     │
                                  └─────────────┘
```

[Fig. 8]

```
┌─────────────────────────────────┐
│  ┌───────────────────────────┐  │
│  │  IMMERSION DIRECTION      │  │ ──── 200
│  │  DETERMINING              │  │
│  │  PORTION                  │  │
│  └───────────────────────────┘  │
│                                 │
│  ┌───────────────────────────┐  │
│  │  DEFOCUS POWER            │  │ ──── 300
│  │  CHANGE DIRECTION         │  │
│  │  DETERMINING PORTION      │  │
│  └───────────────────────────┘  │
│                                 │
│  ┌───────────────────────────┐  │
│  │  LIFTING SPEED            │  │ ──── 400
│  │  SETTING PORTION          │  │
│  └───────────────────────────┘  │
│                                 │
│  ┌───────────────────────────┐  │
│  │  LIFTING SPEED            │  │ ──── 500
│  │  CONTROL PORTION          │  │
│  └───────────────────────────┘  │
│                                 │
│              100                │
└─────────────────────────────────┘
```

[Fig. 9]

[Fig. 10]

[Fig. 11]

[Fig. 12]

[Fig. 13]

[Fig. 14]

[Fig. 15]

[Fig. 16]

[Fig. 17]

## INTERNATIONAL SEARCH REPORT

| International application No. |
|---|
| **PCT/JP2024/014874** |

### A. CLASSIFICATION OF SUBJECT MATTER

*G02C 7/06*(2006.01)i; *G02B 1/14*(2015.01)i; *G02C 7/02*(2006.01)i
FI:   G02C7/06; G02B1/14; G02C7/02

According to International Patent Classification (IPC) or to both national classification and IPC

### B. FIELDS SEARCHED

Minimum documentation searched (classification system followed by classification symbols)

G02C1/00-13/00; G02B1/10-1/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/131825 A1 (HOYA LENS THAILAND LTD.) 01 July 2021 (2021-07-01) | 1-2, 4-10 |
|  | paragraphs [0046]-[0047], [0049]-[0053], [0068], [0126], [0133]-[0134], [0176], [0179] |  |
| Y |  | 3, 11-12 |
| A |  | 13-17 |
| Y | JP 2014-106385 A (HOYA LENSE MANUFACTURING PHILIPPINE INC.) 09 June 2014 (2014-06-09) | 3, 11-12 |
|  | paragraphs [0024]-[0025] |  |
| Y | WO 2021/229889 A1 (HOYA LENS THAILAND LTD.) 18 November 2021 (2021-11-18) | 12 |
|  | paragraphs [0046]-[0049], [0113], [0124], [0127], [0131], [0134], [0137] |  |
| A | WO 2021/131457 A1 (HOYA LENS THAILAND LTD.) 01 July 2021 (2021-07-01) | 1-17 |
|  | entire text, fig. 1-9 |  |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **20 June 2024** | **02 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/014874**

| Patent document cited in search report | | | Publication date (day/month/year) | Patent family member(s) | | | Publication date (day/month/year) |
|---|---|---|---|---|---|---|---|
| WO | 2021/131825 | A1 | 01 July 2021 | EP | 4083691 | A1 | |
| | | | | paragraphs [0047]-[0051], [0053]-[0057], [0072], [0150], [0157]-[0158], [0205], [0208] | | | |
| | | | | US | 2022/0397776 | A1 | |
| | | | | KR | 10-2022-0051261 | A | |
| | | | | CN | 113050297 | A | |
| | | | | CN | 215867412 | U | |
| | | | | TW | 202131019 | A | |
| JP | 2014-106385 | A | 09 June 2014 | EP | 2738593 | A2 | |
| | | | | paragraphs [0024]-[0025] | | | |
| | | | | US | 2014/0146283 | A1 | |
| WO | 2021/229889 | A1 | 18 November 2021 | EP | 4152081 | A1 | |
| | | | | paragraphs [0047]-[0050], [0115], [0126], [0129]-[0132], [0136]-[0138], [0143]-[0144], [0151]-[0155] | | | |
| | | | | US | 2023/0229018 | A1 | |
| | | | | CN | 115485610 | A | |
| | | | | KR | 10-2023-0003018 | A | |
| | | | | TW | 202142927 | A | |
| WO | 2021/131457 | A1 | 01 July 2021 | EP | 4083689 | A1 | |
| | | | | entire text, fig. 1-9 | | | |
| | | | | JP | 2021-105692 | A | |
| | | | | US | 2023/0381810 | A1 | |
| | | | | KR | 10-2022-0051392 | A | |
| | | | | CN | 114787695 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170131567
- WO 2021131825 A

- JP 2007077327 A

**Non-patent literature cited in the description**

- *Translational Vision Science & Technology*, November 2018, vol. 7 (6), 17